# EUROPEAN PATENT APPLICATION

(11) **EP 4 815 374 A1**
(43) Date of publication of application: **30.09.2026**
(21) Application number: 25752471.0
(22) Date of filing: 07.02.2025
(51) Int. Cl.: H04L 12/28, H04L 67/52, H04L 67/303, G06T 11/40, G16Y 10/80, G16Y 40/30

(54) **SERVER FOR PROVIDING INTERNET OF THINGS-BASED SERVICES, OPERATION METHOD THEREOF, AND STORAGE MEDIUM**

(30) Priority: 07.02.2024 KR 20240018611; 16.02.2024 KR 20240022828
(71) Applicant: Samsung Electronics Co., Ltd., Suwon-si, Gyeonggi-do 16677 (KR)
(72) Inventor: KIM, Seokhyun, Suwon-si, Gyeonggi-do 16677 (KR)
(74) Representative: Gulde & Partner
(86) International application number: PCT/KR2025/001830
(87) International publication number: WO 2025/170361

(57) **Abstract**

According to an embodiment, a server (208, 350) may comprise a communication circuit (491), at least one processor (421), and a memory (431) for storing instructions. According to an embodiment, the instructions may be configured, when executed by the at least one processor, to cause the server to: receive a request for providing at least a part of first map data from an electronic device through the communication circuit, the first map data indicating a plurality of spaces of a building and locations of a plurality of controlled devices in the plurality of spaces; transmit a message including access information to an external electronic device selected by the electronic device, wherein the at least a part of the first map data is provided to the external electronic device accessing the server by using the access information; on the basis that at least one controlled device is allowed to be controlled by the external electronic device or that the at least one controlled device belongs to at least one space, generate second map data which corresponds to the at least a part of the first map data and indicates at least one space of the building and a location of the at least one controlled device; and transmit the second map data to the external electronic device through the communication circuit..

## Description

### [Technical Field]

An embodiment disclosed in the disclosure relates to a server for providing an internet of things-based service, a method of operating the same, and a storage medium.

### [Background Art]

Due to the development of wireless communication technology, communication functions have been included in various objects to form a network, thereby enabling convenient control of objects. Connecting objects to a network by including communication functions in the objects as described above is referred to as the internet of things (IoT), and is widely used in real life. Such IoT may be applied to various fields such as smart home, smart building, smart city, smart car or connected car, smart grid, health care, smart appliances, and advanced medical services through convergence and combination between conventional IT technology and various industries.

Meanwhile, various home appliances are provided in homes for convenience of users. Various services for more conveniently operating or controlling home appliances using IoT technology are being proposed. Home network technology may provide various services through a home network to users in a home. For example, a user may control various IoT devices (e.g., home appliances or small electronic devices to which IoT technology is applied) constituting a home network using a personal electronic device (e.g., a smartphone). A user may execute an application for managing each IoT device, and may desire to receive more various services for controlling the IoT devices.

### [Detailed Description of the Invention]

### [Technical Solution]

According to an embodiment, a server 208, 350 may include communication circuitry 491, at least one processor 421, and memory 431 storing instructions. According to an embodiment, the instructions, when executed by the at least one processor, are configured to cause the server to receive a request to provide at least part of first map data from an electronic device, wherein the first map data may indicate a plurality of spaces of a building and locations of a plurality of controlled devices within the plurality of spaces.

According to an embodiment, the instructions, when executed by the at least one processor, are configured to cause the server to transmit a message including access information to an external electronic device selected by the electronic device, wherein the at least part of the first map data may be provided to the external electronic device that accesses the server using the access information.

According to an embodiment, the instructions, when executed by the at least one processor, may be configured to cause the server to, based on at least one controlled device being allowed to be controlled by the external electronic device or the at least one controlled device belonging to at least one space, generate second map data that correspond to the at least part of the first map data and indicate the at least one space of the building and a location of the at least one controlled device.

According to an embodiment, the instructions, when executed by the at least one processor, may be configured to cause the server to transmit the second map data to the external electronic device through the communication circuitry.

According to an embodiment, a method for providing an internet of things-based service in a server may include an operation of receiving a request to provide at least part of first map data from an electronic device, wherein the first map data may indicate a plurality of spaces of a building and locations of a plurality of controlled devices within the plurality of spaces.

According to an embodiment, the method may include an operation of transmitting a message including access information to an external electronic device selected by the electronic device, wherein the at least part of the first map data may be provided to the external electronic device that accesses the server using the access information.

According to an embodiment, the method may include an operation of, based on at least one controlled device being allowed to be controlled by the external electronic device or the at least one controlled device belonging to at least one space, generating second map data that correspond to the at least part of the first map data and indicate the at least one space of the building and a location of the at least one controlled device.

According to an embodiment, the method may include an operation of transmitting the second map data to the external electronic device.

In a non-transitory storage medium storing computer-readable instructions, the instructions are configured to, when executed by at least one processor 421 of a server 208, 350, cause the server to perform at least one operation, wherein the at least one operation may include an operation of receiving a request to provide at least part of first map data from an electronic device, wherein the first map data may indicate a plurality of spaces of a building and locations of a plurality of controlled devices within the plurality of spaces.

According to an embodiment, the at least one operation may include an operation of transmitting a message including access information to an external electronic device selected by the electronic device, wherein the at least part of the first map data may be provided to the external electronic device that accesses the server using the access information.

According to an embodiment, the at least one operation may include an operation of, based on at least one controlled device being allowed to be controlled by the external electronic device or the at least one controlled device belonging to at least one space, generating second map data that correspond to the at least part of the first map data and indicate the at least one space of the building and a location of the at least one controlled device.

According to an embodiment, the at least one operation may include an operation of transmitting the second map data to the external electronic device.

### [Brief Description of Drawings]

FIG. 1 illustrates an internet of things (IoT) system according to an embodiment.
FIG. 2 is a block diagram illustrating an electronic device in a network environment according to an embodiment.
FIG. 3 is a view illustrating a network including controlled devices according to an embodiment.
FIG. 4 is an internal block configuration diagram illustrating each of an electronic device and a server that perform IoT control according to an embodiment.
FIG. 5A is a view illustrating a method of displaying a partial map according to authority in a map indicating locations of IoT devices according to an embodiment.
FIG. 5B is an example view illustrating screens displayed on an owner-side electronic device and a member-side external electronic device according to an embodiment.
FIG. 6 is an operation flowchart for providing an internet of things-based service according to an embodiment.
FIG. 7A is a signal flow diagram among an electronic device, a server, and an external electronic device for providing an IoT service according to member invitation according to an embodiment.
FIG. 7B is a diagram continuing from FIG. 7A.
FIG. 8A is a signal flow diagram among an electronic device, a server, and an external electronic device for providing an IoT service according to selection of a sharing target IoT device according to an embodiment.
FIG. 8B is a diagram continuing from FIG. 8A.
FIG. 9 is a view illustrating a configuration of shared map data according to an embodiment.
FIG. 10 is a view illustrating a method of separating spaces within a map according to an embodiment.
FIG. 11 is an example view illustrating a location of a sharing target IoT device in one space within a map according to an embodiment.
FIG. 12A is an example view illustrating locations of sharing target IoT devices in two or more spaces within a map in a first manner according to an embodiment.
FIG. 12B is an example view illustrating locations of sharing target IoT devices in two or more spaces within a map in a second manner according to an embodiment.
FIG. 13A is an example view illustrating locations of sharing target IoT devices in two or more spaces within a map in a third manner according to an embodiment.
FIG. 13B is an example view illustrating locations of sharing target IoT devices in two or more spaces within a map in a fourth manner according to an embodiment.
FIG. 14A is an example view illustrating locations of sharing target IoT devices in two or more spaces within a map in a fifth manner according to an embodiment.
FIG. 14B is an example view illustrating locations of sharing target IoT devices in two or more spaces within a map in a sixth manner according to an embodiment.
FIG. 15 is an example view illustrating locations of IoT devices in a space where sharing is allowed and a space where sharing is not allowed within a map according to an embodiment.
FIG. 16A is an example view illustrating an IoT device in a space where sharing is not allowed within a map in a first manner according to an embodiment.
FIG. 16B is an example view illustrating an IoT device in a space where sharing is not allowed within a map in a second manner according to an embodiment.

In connection to the description of the drawings, the same or similar reference numerals may be used for the same or similar components.

### [Mode for Carrying out the Invention]

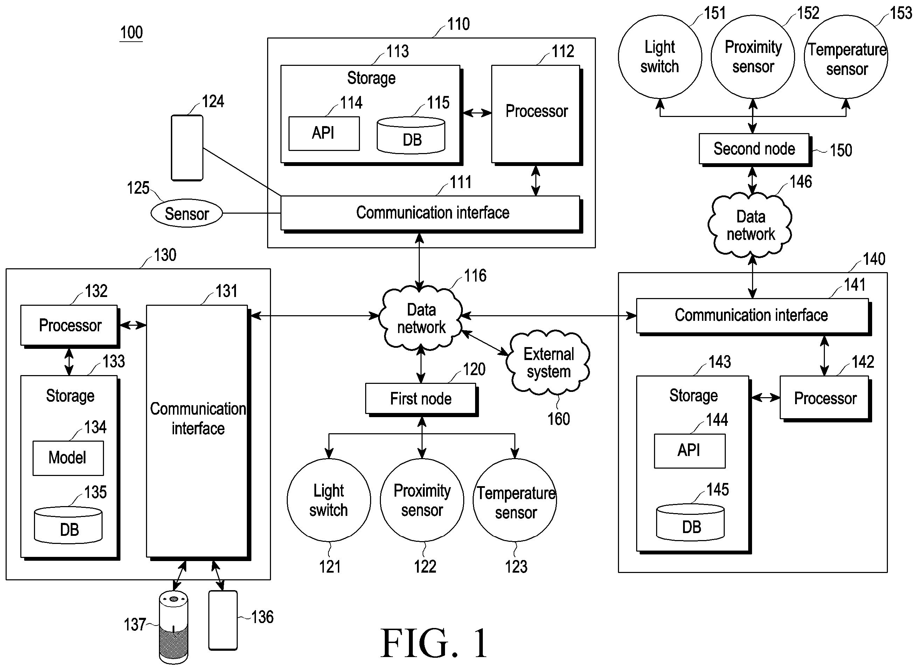

FIG. 1 illustrates an internet of things (IoT) system 100 according to an embodiment. Meanwhile, at least some of the components of FIG. 1 may be omitted, and components not illustrated may be further included.

Referring to FIG. 1, an IoT system 100 according to an embodiment includes a plurality of electronic devices connectable to a data network 116 or 146. For example, the IoT system 100 may include at least one of a first IoT server 110, a first node 120, a voice assistance server 130, a second IoT server 140, a second node 150, or devices 121, 122, 123, 124, 125, 136, 137, 151, 152, 153.

According to an embodiment, the first IoT server 110 may include at least one of a communication interface 111, a processor 112, or a storage unit 113. The second IoT server 140 may include at least one of a communication interface 141, a processor 142, or a storage unit 143. The "IoT server" in this document may remotely control and/or monitor one or more devices (e.g., devices 121, 122, 123, 124, 125, 151, 152, 153) through a relay device (e.g., the first node 120 or the second node 150), or directly without a relay device, based on, e.g., a data network (e.g., the data network 116 or the data network 146). The "device" herein is a sensor, home appliance, office electronic device, or device for performing a process placed (or located) in a local environment such as, e.g., a home, an office, a factory, a building, an external site, or other types of premises, and there is no limitation on the type thereof. A device that receives a control command and performs an operation corresponding to the control command may be referred to as a "target device." An IoT server may also be referred to as a central server in that the IoT server selects a target device from among a plurality of devices and provides a control command.

According to an embodiment, the first IoT server 110 may communicate with the devices 121, 122, 123 through the data network 116. The data network 116 may mean a network for long-distance communication, such as, e.g., the Internet or a computer network (e.g., LAN or WAN), or may include a cellular network.

According to an embodiment, the first IoT server 110 may be connected to the data network 116 through the communication interface 111. The communication interface 111 may include a communication device (or a communication module) for supporting communication of the data network 116, and may be integrated into one component (e.g., a single chip), or may be implemented as separate plural components (e.g., plural chips). The first IoT server 110 may communicate with the devices 121, 122, 123 through the first node 120. The first node 120 may receive data from the first IoT server 110 through the data network 116 and transmit the received data to at least some of the devices 121, 122, 123. Alternatively, the first node 120 may receive data from at least some of the devices 121, 122, 123, and transmit the received data to the first IoT server 110 through the data network 116. The first node 120 may function as a bridge between the data network 116 and the devices 121, 122, 123. Meanwhile, although FIG. 1 illustrates as if there is one first node 120, this is merely exemplary and there is no limitation on the number thereof.

The "node" in this document may be an edge computing system, or may be a hub device. According to an embodiment, the first node 120 may support wired and/or wireless communication of the data network 116, and also support wired and/or wireless communication with the devices 121, 122, 123. For example, the first node 120 may be connected to the devices 121, 122, 123 through a short-range communication network such as at least one of Bluetooth, Wi-Fi, Wi-Fi direct, Z-wave, Zigbee, INSETEON, X10, or infrared data association (IrDA), but there is no limitation on the type of communication. The first node 120 may be placed (or located) in an environment such as, e.g., a home, an office, a factory, a building, an external site, or other types of premises. Accordingly, the devices 121, 122, 123 may be monitored and/or controlled by a service provided by the first IoT server 110, and the devices 121, 122, 123 may not be required to have a capability of complete network communication (e.g., Internet communication) for a direct connection to the first IoT server 110. The devices 121, 122, 123 are illustrated as implemented as electronic devices in a home environment, such as, e.g., a light switch, a proximity sensor, and a temperature sensor, but this is merely exemplary and there is no limitation.

According to an embodiment, the first IoT server 110 may also support direct communication with the devices 124, 125. Here, "direct communication" may mean communication that does not pass through a relay device such as, e.g., the first node 120, e.g., communication through a cellular communication network and/or a data network.

According to an embodiment, the first IoT server 110 may transmit a control command to at least some of the devices 121, 122, 123, 124, 125. Here, "control command" may refer to data that causes a controllable device to perform a specific operation, and the specific operation is an operation performed by a device, which may include outputting information, sensing information, reporting information, and managing information (e.g., deleting or creating), and there is no limitation on the type. For example, the processor 112 may obtain information (or a request) for generating a control command from an external source (e.g., at least some of the voice assistance server 130, the second IoT server 140, the external system 160, or the devices 121, 122, 123, 124, 125), and may generate a control command based on the obtained information. Alternatively, the processor 112 may generate a control command based on a monitoring result of at least some of the devices 121, 122, 123, 124, 125 satisfying a specified condition. The processor 112 may control the communication interface 111 to transmit the control command to a target device.

According to an embodiment, the processor 112, or the processor 132, or the processor 142 may be implemented as a combination of one or more of a general-purpose processor such as a central processing unit (CPU), a digital signal processor (DSP), an application processor (AP), or a communication processor (CP), a graphics-dedicated processor such as a graphical processing unit (GPU) or a vision processing unit (VPU), or an artificial intelligence-dedicated processor such as a neural processing unit (NPU). The above-described processing unit is merely exemplary, and those skilled in the art will understand that the processor 112 has no limitation as long as it is a computing means capable of executing, e.g., instructions stored in the memory 113 and outputting the execution result.

According to an embodiment, the processor 112 may configure a web-based interface based on an API 114, or may expose a resource managed by the first IoT server 110 to the outside. The web-based interface may support communication between, e.g., the first IoT server 110 and an external web service. The processor 112 may allow, e.g., the external system 160 to control and/or access the devices 121, 122, 123. The external system 160 may be, e.g., an independent system that is not associated with or is not part of the system 100. The external system 160 may be, e.g., an external server, or may be a website. However, security for access to the devices 121, 122, 123 or resources of the first IoT server 110 from the external system 160 is required. According to an embodiment, the processor 112 may expose an API endpoint (e.g., a universal resource locator (URL)) based on the API 114 of an automation application to the outside. As described above, the first IoT server 110 may deliver a control command to a target device among the devices 121, 122, 123. Meanwhile, descriptions of the communication interface 141, the processor 142, the API 144 of the storage unit 143, and the database 145 of the second IoT server 140 may be substantially the same as descriptions of the communication interface 111, the processor 112, the API 114 of the storage unit 113, and the database 115 of the first IoT server 110. Further, descriptions of the second node 150 may be substantially the same as descriptions of the first node 120. The second IoT server 140 may deliver a control command to a target device among the devices 151, 152, 153. The first IoT server 110 and the second IoT server 140 may be operated by the same service provider in an embodiment, but may be operated by different service providers respectively in another embodiment.

According to an embodiment, the voice assistance server 130 may transmit/receive data to/from the first IoT server 110 through the data network 116. The voice assistance server 130 according to an embodiment may include at least one of a communication interface 131, a processor 132, or a storage unit 133. The communication interface 131 may communicate with a smartphone 136 or an AI speaker 137 through a data network (not illustrated) and/or a cellular network (not illustrated). The smartphone 136 or the AI speaker 137 may include a microphone, and may obtain user voice, convert it into a voice signal, and transmit the voice signal to the voice assistance server 130. The processor 132 may receive a voice signal from the smartphone 136 or the AI speaker 137 through the communication interface 131. The processor 132 may process the received voice signal based on a stored model 134. The processor 132 may generate (or identify) a control command using the processing result based on information stored in a database 135. According to an embodiment, the storage unit 113, 133, 143 may include a non-transitory storage medium of at least one type among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, or optical disk, and the type is not limited thereto.

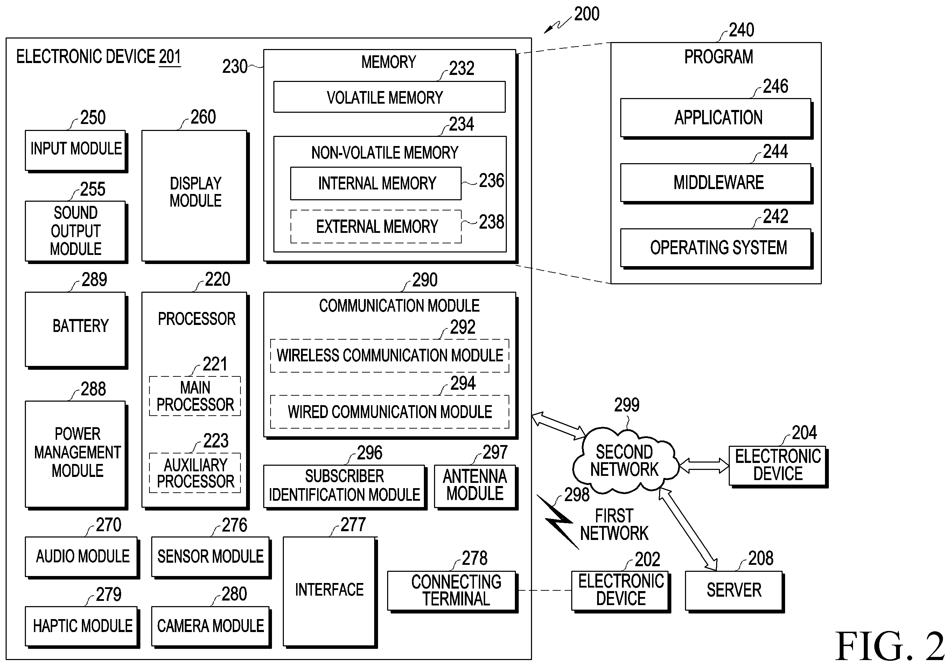

In an embodiment, at least one device (e.g., the device 124) communicating with the first IoT server 110 may be a smartphone (e.g., the electronic device 201 of FIG. 2) in a network environment.

FIG. 2 is a block diagram illustrating an electronic device 201 in a network environment 200, according to embodiments.

Referring to FIG. 2, in the network environment 200, the electronic device 201 may communicate with an electronic device 202 through a first network 298 (e.g., a short-range wireless communication network), or may communicate with at least one of an electronic device 204 or a server 208 through a second network 299 (e.g., a long-range wireless communication network). According to an embodiment, the electronic device 201 may communicate with the electronic device 204 through the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module 296, or an antenna module 297. In some embodiments, at least one of these components (e.g., the connecting terminal 278) may be omitted from the electronic device 201, or one or more other components may be added. In some embodiments, some of these components (e.g., the sensor module 276, the camera module 280, or the antenna module 297) may be integrated into one component (e.g., the display module 260).

The processor 220 may, e.g., execute software (e.g., a program 240) to control at least one other component (e.g., a hardware or software component) of the electronic device 201 connected to the processor 220, and may perform various data processing or operations. According to an embodiment, as at least part of data processing or operation, the processor 220 may store a command or data received from another component (e.g., the sensor module 276 or the communication module 290) in a volatile memory 232, process the command or data stored in the volatile memory 232, and store result data in a non-volatile memory 234. According to an embodiment, the processor 220 may include a main processor 221 (e.g., a central processing unit or an application processor) or an auxiliary processor 223 (e.g., a graphics processing unit, a neural processing unit (NPU), an image signal processor, a sensor hub processor, or a communication processor) that is operable independently of or together with the main processor 221. For example, in case that the electronic device 201 includes the main processor 221 and the auxiliary processor 223, the auxiliary processor 223 may be configured to use lower power than the main processor 221 or to be specialized for a designated function. The auxiliary processor 223 may be implemented separately from, or as part of, the main processor 221.

The auxiliary processor 223 may, e.g., control at least some of functions or states related to at least one component (e.g., the display module 260, the sensor module 276, or the communication module 290) among the components of the electronic device 201, on behalf of the main processor 221 while the main processor 221 is in an inactive (e.g., sleep) state, or together with the main processor 221 while the main processor 221 is in an active (e.g., application execution) state. According to an embodiment, the auxiliary processor 223 (e.g., an image signal processor or a communication processor) may be implemented as part of another component (e.g., the camera module 280 or the communication module 290) that is functionally related. According to an embodiment, the auxiliary processor 223 (e.g., a neural processing unit) may include a hardware structure specialized for processing of an artificial intelligence model. An artificial intelligence model may be generated through machine learning. Such learning may be performed, e.g., in the electronic device 201 itself on which the artificial intelligence model is performed, or may be performed through a separate server (e.g., the server 208). A learning algorithm may include, e.g., supervised learning, unsupervised learning, semi-supervised learning, or reinforcement learning, but is not limited to the above-described examples. An artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bi-directional recurrent deep neural network (BRDNN), deep Q-networks, or a combination of two or more thereof, but is not limited to the foregoing examples. The artificial intelligence model may include, additionally or alternatively, a software structure in addition to a hardware structure.

The memory 230 may store various data used by at least one component of the electronic device 201 (e.g., the processor 220 or the sensor module 276). The data may include, e.g., software (e.g., the program 240) and input data or output data for instructions related thereto. The memory 230 may include a volatile memory 232 or a non-volatile memory 234.

The program 240 may be stored as software in the memory 230 and may include, e.g., an operating system 242, middleware 244, or an application 246.

The input module 250 may receive an instruction or data to be used by a component of the electronic device 201 (e.g., the processor 220) from outside of the electronic device 201 (e.g., a user). The input module 250 may include, e.g., a microphone, a mouse, a keyboard, a key (e.g., a button), or a digital pen (e.g., a stylus pen).

The sound output module 255 may output a sound signal to outside of the electronic device 201. The sound output module 255 may include, e.g., a speaker or a receiver. The speaker may be used for general purposes such as multimedia playback or recording playback. The receiver may be used for receiving an incoming call. According to an embodiment, the receiver may be implemented separately from, or as part of, the speaker.

The display module 260 may visually provide information to outside of the electronic device 201 (e.g., a user). The display module 260 may include, e.g., a display, a hologram device, or a projector, and a control circuit for controlling the device. According to an embodiment, the display module 260 may include a touch sensor configured to detect a touch, or a pressure sensor configured to measure an intensity of a force generated by the touch.

The audio module 270 may convert a sound into an electrical signal, or conversely, convert an electrical signal into a sound. According to an embodiment, the audio module 270 may obtain a sound through the input module 250, or may output a sound through the sound output module 255 or an external electronic device (e.g., the electronic device 202) (e.g., a speaker or a headphone) directly or wirelessly connected to the electronic device 201.

The sensor module 276 may detect an operational state (e.g., power or temperature) of the electronic device 201 or an environmental state (e.g., a user state) external to the electronic device 201, and generate an electrical signal or data value corresponding to the detected state. According to an embodiment, the sensor module 276 may include, e.g., a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols that may be used for the electronic device 201 to be directly or wirelessly connected to an external electronic device (e.g., the electronic device 202). According to an embodiment, the interface 277 may include, e.g., a high definition multimedia interface (HDMI), a universal serial bus (USB) interface, an SD card interface, or an audio interface.

The connecting terminal 278 may include a connector through which the electronic device 201 may be physically connected to an external electronic device (e.g., the electronic device 202). According to an embodiment, the connecting terminal 278 may include, e.g., an HDMI connector, a USB connector, an SD card connector, or an audio connector (e.g., a headphone connector).

The haptic module 279 may convert an electrical signal into a mechanical stimulus (e.g., vibration or movement) or an electrical stimulus that a user may perceive through a tactile sensation or a kinesthetic sensation. According to an embodiment, the haptic module 279 may include, e.g., a motor, a piezoelectric element, or an electrical stimulation device.

The camera module 280 may capture a still image and a video. According to an embodiment, the camera module 280 may include one or more lenses, image sensors, image signal processors, or flashes.

The power management module 288 may manage power supplied to the electronic device 201. According to an embodiment, the power management module 288 may be implemented as, e.g., at least part of a power management integrated circuit (PMIC).

The battery 289 may supply power to at least one component of the electronic device 201. According to an embodiment, the battery 289 may include, e.g., a non-rechargeable primary cell, a rechargeable secondary cell, or a fuel cell.

The communication module 290 may support establishing a direct (e.g., wired) communication channel or a wireless communication channel between the electronic device 201 and an external electronic device (e.g., the electronic device 202, the electronic device 204, or the server 208), and performing communication through the established communication channel. The communication module 290 may include one or more communication processors that operate independently from the processor 220 (e.g., an application processor) and support direct (e.g., wired) communication or wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication module). A corresponding communication module among these communication modules may communicate with the external electronic device 204 through a first network 298 (e.g., a short-range communication network such as Bluetooth, wireless fidelity (Wi-Fi) direct, or infrared data association (IrDA)) or a second network 299 (e.g., a long-range communication network such as a legacy cellular network, a 5G network, a next-generation communication network, the Internet, or a computer network (e.g., a LAN or a WAN)). These various types of communication modules may be integrated into a single component (e.g., a single chip) or may be implemented as a plurality of separate components (e.g., a plurality of chips). The wireless communication module 292 may identify or authenticate the electronic device 201 within a communication network such as the first network 298 or the second network 299 using subscriber information (e.g., international mobile subscriber identity (IMSI)) stored in a subscriber identification module 296.

The wireless communication module 292 may support a 5G network after a 4G network and next-generation communication technology, e.g., new radio access technology (NR access technology). The NR access technology may support high-speed transmission of high-capacity data (enhanced mobile broadband (eMBB)), minimization of terminal power and access of multiple terminals (massive machine type communications (mMTC)), or high reliability and low latency (ultra-reliable and low-latency communications (URLLC)). The wireless communication module 292 may support a high-frequency band (e.g., a mmWave band), e.g., for achieving a high data transmission rate. The wireless communication module 292 may support various technologies for securing performance in the high-frequency band, e.g., technologies such as beamforming, massive multiple-input and multiple-output (massive MIMO), full dimensional MIMO (FD-MIMO), array antenna, analog beam-forming, or large scale antenna. The wireless communication module 292 may support various requirements specified by the electronic device 201, an external electronic device (e.g., the electronic device 204), or a network system (e.g., the second network 299). According to an embodiment, the wireless communication module 292 may support a peak data rate (e.g., 20 Gbps or more) for eMBB realization, loss coverage (e.g., 164 dB or less) for mMTC realization, or U-plane latency (e.g., 0.5 ms or less for each of downlink (DL) and uplink (UL), or round trip 1 ms or less) for URLLC realization.

The antenna module 297 may transmit a signal or power to an external source (e.g., an external electronic device) or receive a signal or power from an external source. According to an embodiment, the antenna module 297 may include an antenna including a radiator formed of a conductor or a conductive pattern formed on a substrate (e.g., a PCB). According to an embodiment, the antenna module 297 may include a plurality of antennas (e.g., an array antenna). In this case, at least one antenna suitable for a communication scheme used in a communication network such as the first network 298 or the second network 299 may be selected from the plurality of antennas by, e.g., the communication module 290. A signal or power may be transmitted or received between the communication module 290 and an external electronic device through the selected at least one antenna. According to an embodiment, another component (e.g., a radio frequency integrated circuit (RFIC)) in addition to the radiator may be additionally formed as a component of the antenna module 297.

According to an embodiment, the antenna module 297 may form a mmWave antenna module. According to an embodiment, the mmWave antenna module may include a printed circuit board, an RFIC disposed on or adjacent to a first surface (e.g., a lower surface) of the printed circuit board and capable of supporting a designated high-frequency band (e.g., a mmWave band), and a plurality of antennas (e.g., an array antenna) disposed on or adjacent to a second surface (e.g., an upper surface or a side surface) of the printed circuit board and capable of transmitting or receiving a signal of the designated high-frequency band.

At least some of the components may be connected to each other through a communication scheme between peripheral devices (e.g., a bus, general purpose input and output (GPIO), serial peripheral interface (SPI), or mobile industry processor interface (MIPI)) and may exchange a signal (e.g., a command or data) with each other.

According to an embodiment, a command or data may be transmitted or received between the electronic device 201 and the external electronic device 204 through a server 208 connected to the second network 299. Each of the external electronic devices 202 or 204 may be a device of the same type as or a different type from the electronic device 201. According to an embodiment, all or some of operations executed in the electronic device 201 may be executed in one or more external electronic devices among the external electronic devices 202, 204, or 208. For example, in case that the electronic device 201 is required to perform a predetermined function or service automatically or in response to a request from a user or another device, the electronic device 201 may request one or more external electronic devices to perform at least part of the function or the service instead of, or in addition to, executing the function or service by itself. The one or more external electronic devices that receive the request may execute at least part of the requested function or service, or an additional function or service related to the request, and may transmit a result of the execution to the electronic device 201. The electronic device 201 may provide the result, as it is or after additionally processing the result, as at least part of a response to the request. For this purpose, e.g., cloud computing, distributed computing, mobile edge computing (MEC), or client-server computing technology may be used. The electronic device 201 may provide ultra-low latency services using, e.g., distributed computing or mobile edge computing. In another embodiment, the external electronic device 204 may include an internet of things (IoT) device. The server 208 may be an intelligent server using machine learning and/or neural networks. According to an embodiment, the external electronic device 204 or the server 208 may be included in the second network 299. The electronic device 201 may be applied to intelligent services (e.g., smart home, smart city, smart car, or healthcare) based on 5G communication technology and IoT-related technology.

In the following detailed description, the same reference numerals may be allocated or omitted for configurations that may be easily understood through the preceding embodiments, and detailed descriptions thereof may also be omitted. The electronic device 201 or the server 208 according to an embodiment of the disclosure may be implemented by selectively combining configurations of different embodiments, and a configuration of one embodiment may be replaced by a configuration of another embodiment. For example, it is noted that the disclosure is not limited to specific drawings or embodiments.

Prior to describing the disclosure, an application for management of each IoT device used in the disclosure is described.

For example, an IoT-based application (e.g., SmartThings application) may control IoT devices existing in various spaces of an indoor environment, and may divide and control a plurality of IoT devices into groups with respect to spaces. To this end, when initially executing the application, a user may manually set groups of IoT devices or set arrangement of objects within a user interface (UI). For example, a user may divide a plurality of IoT devices located in a home according to spaces such as a master bedroom, a living room, and a kitchen according to the user's selection, thereby controlling the IoT devices belonging to the designated spaces.

In the case of a smart home environment, a user may control IoT devices in each space using an electronic device, but other users in (or residing in) the same space may also control the IoT devices in case that they install the application. However, in the case of a smart home environment, there is a possibility of privacy infringement due to exposure of personal private spaces. Therefore, by granting different authorities to other users according to the user's purpose, so that other users granted the authority may control an IoT device in a specific space or a specific IoT device, security may be strengthened from the user's standpoint while not impairing usability.

For example, if an invited member's electronic device is allowed to control only some IoT devices in some spaces based on partial map data allowed to the invited member among the entire map data indicating locations of IoT devices in each space, information may be shared as much as the user intended.

In an embodiment, a server for providing an internet of things-based service, a method of operating the same, and a storage medium may be provided for providing partial map data indicating a location of at least one controlled device (e.g., an IoT device) in at least one space within a building among entire map data.

According to an embodiment, by providing a partial map to an invited member from among the entire map indicating locations of IoT devices in a plurality of spaces within a building, the invited member may intuitively identify a space where sharing is allowed among the plurality of spaces and IoT devices within that space.

According to an embodiment, by granting different authorities to other users according to the user's purpose, so that other users granted the authority may control an IoT device in a specific space or a specific IoT device, security may be strengthened from the user's standpoint.

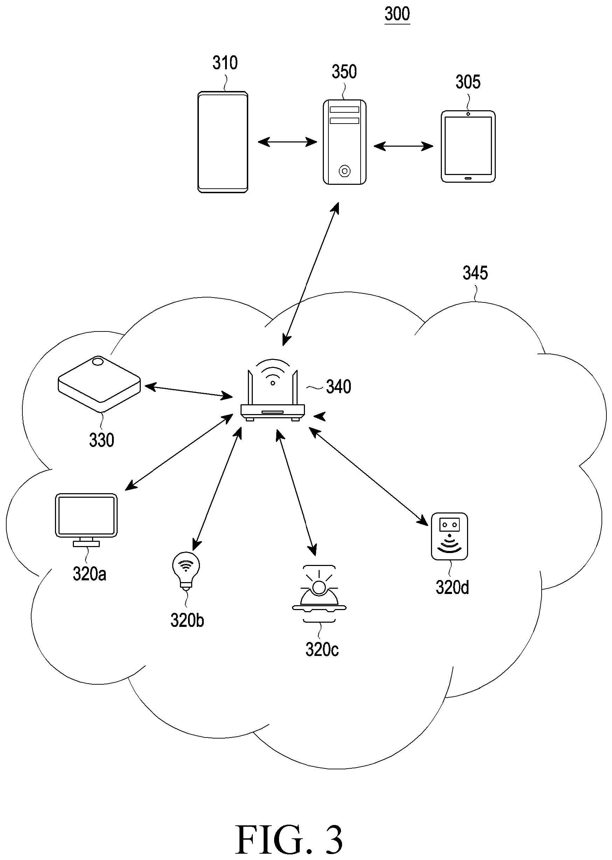

FIG. 3 is a view illustrating a network including controlled devices according to an embodiment of the disclosure.

Referring to FIG. 3, a network 300 (e.g., an IoT network) may include a server 350 operating as an IoT cloud, an electronic device 310 (e.g., the electronic device 201 of FIG. 2) that may communicate with the server 350 through long-distance wireless communication (e.g., the second network 299 of FIG. 2), and one or more controlled devices (e.g., IoT devices 320a, 320b, 320c, and 320d) within a local network 345 (e.g., a home network) that support IoT technology and connect to an access point (AP) 340 using short-range wireless communication (e.g., Bluetooth or Wi-Fi) and may communicate with the server 350 through the AP 340.

At least one hub device 330 (e.g., a wireless charger, a TV, a home automation panel, a personal computer (PC), a smartphone, or a tablet) configured to manage connection and status of the IoT devices 320a, 320b, 320c, and 320d may be included in the local network 345. The at least one hub device 330 may be referred to as a control device, or a coordinator. The at least one hub device 330 may be onboarded by being registered with the server 350 similarly to the IoT devices 320a, 320b, 320c, and 320d, connect to the AP 340 through short-range wireless communication, and communicate with the server 350 through the AP 340. The at least one hub device 330 may allow at least one of the IoT devices 320a, 320b, 320c, and 320d to connect to the server 350 through the AP 340. The at least one hub device 330 may directly (e.g., without passing through the electronic device 310, the AP 340, or the server 350) control at least one (e.g., the IoT devices 320c, 320d) of the IoT devices 320a, 320b, 320c, and 320d.

The electronic device 310 may communicate (e.g., control or manage) with the IoT devices 320a, 320b, 320c, 320d through the server 350, through long-distance wireless communication (e.g., the second network 299), or through short-range wireless communication (e.g., the first network 298 of FIG. 2).

The IoT devices 320a, 320b, 320c, 320d may be controlled (e.g., report status and/or execute a designated action) by a remote command (e.g., a control command from the electronic device 310, the server 350, or the at least one hub device 330), and may include, e.g., at least one of a television, an air conditioner, an air purifier, a refrigerator, a washing machine, a bulb, a security camera, a sensor, or a window treatment. The IoT devices 320a, 320b, 320c, 320d may communicate with the electronic device 310 through the at least one hub device 330 or the AP 340 within the local network 345, may communicate with the electronic device 310 through the server 350, may directly (e.g., without passing through the server 350, the AP 340, or the at least one hub device 330) communicate with the electronic device 310, or may directly (e.g., without passing through the server 350, the AP 340, or the electronic device 310) communicate with the at least one hub device 330.

In an embodiment, the electronic device 310 may be, e.g., a personal electronic device such as a smartphone or a tablet, or an electronic device having a display and a user interface such as a television or a control console. In an embodiment, the electronic device 310 may be connected (or paired) with at least one external electronic device (e.g., a wearable device such as a tablet or a smart watch) configured to execute at least some of the functions described below of the electronic device 310 directly or through the electronic device 310.

At least one member device 305 (e.g., a tablet, another smartphone, or a wearable device) including at least some capabilities and/or control authority of the electronic device 310 may be included in the network 300. In an embodiment, a member device may not execute a registration procedure for the IoT devices 320a, 320b, 320c, 320d or the hub device 330, but may execute a function of identifying or controlling the status of the IoT devices 320a, 320b, 320c, 320d and/or the hub device 330 registered with the server 350 by being granted authority from the electronic device 310. In an embodiment, the member device 305 may be associated with the same user account as the electronic device 310, the IoT devices 320a, 320b, 320c, 320d, and/or the hub device 330.

In an embodiment, the electronic device 310 may discover at least one (e.g., the IoT device 320a) of the IoT devices 320a, 320b, 320c, 320d or the hub device 330, and may execute a registration procedure (e.g., onboarding) of registering the discovered IoT device 320a or the hub device 330 with the server 350. The IoT devices 320a, 320b, 320c, 320d and the hub device 330 may be registered with the server 350 to be associated with a user account. The electronic device 310 may monitor and control the status (e.g., connection status) of the IoT devices 320a, 320b, 320c, 320d and the hub device 330 registered with the server 350 based on the user account.

The electronic device 310 may identify the status of the IoT devices 320a, 320b, 320c, 320d and the hub device 330 to be used for the IoT service by a user, or may control (e.g., transmit a control command instructing to execute a specific action or set an automation rule) the IoT devices 320a, 320b, 320c, 320d and the hub device 330. In an embodiment, an automation rule may include an execution condition and an action related to at least one IoT device among the IoT devices 320a, 320b, 320c, 320d. In an embodiment, the electronic device 310 may generate at least one automation rule related to at least one of the IoT devices 320a, 320b, 320c, 320d. Information of the generated at least one automation rule may be stored in the server 350 and/or the hub device 330.

The electronic device 310 may become an owner device of the local network 345. According to an embodiment, the electronic device 310 operating as an owner device may manage the IoT devices 320a, 320b, 320c, 320d onboarded using an IoT-based application (e.g., SmartThings application). For example, the electronic device 310 may perform management and control functions for the onboarded IoT devices 320a, 320b, 320c, 320d existing in various spaces within a building.

The electronic device 310 may receive data from the IoT devices 320a, 320b, 320c, 320d and display a screen corresponding to the received data. For example, if an IoT-based application for controlling the IoT devices 320a, 320b, 320c, 320d arranged in divided spaces of an indoor environment is executed, the electronic device 310 may display a user interface corresponding to an IoT-based service related to the executed application. For example, the IoT-based service may provide entire map data indicating a plurality of spaces of a building and locations of a plurality of controlled devices within the plurality of spaces.

In an embodiment, the electronic device 310 may invite the member device 305 to the IoT-based service through the application. After inviting the member device 305, the electronic device 310 may select a controlled device to share in response to acceptance of the invitation from the member device 305.

Further, a user of the electronic device 310 may select a controlled device to share with respect to the member device 305, and provide selection information of the controlled device to the server 350. Here, the selection information of the controlled device may include at least one of information (e.g., identification information or room name) of at least one space selected by a user among controlled devices located in each of the plurality of spaces, or information (e.g., identification information or product information) of a controlled device within the at least one space. As the server 350 receives the selection information of the controlled device from the electronic device 310, the server 350 may regard it as a request for generating a map based on the controlled device, and may generate a map (or map data) corresponding to a part of the entire map (or map data) based on the selection information of the controlled device. The server 350 may transmit the generated map to the member device 305 in order to share the generated map with the member device 305 (or to provide it to the member device 305). The map generation operation and the operation for providing the generated map is described below.

According to an embodiment, based on information of at least one controlled device selected by a user of the electronic device 310, the server 350 may restrictively provide control authority for a space where the selected controlled device is located among the entire map. For example, the server 350 may generate a map corresponding to a space where the selected controlled device is located among the plurality of spaces and a map in which the selected controlled device located on the map is indicated using an object, and provide it to the member device 305. Accordingly, the invited member device 305 may intuitively identify a space where sharing is allowed among the plurality of spaces and controllable controlled devices within that space.

According to an embodiment, based on identification information of at least one space selected by a user of the electronic device 310, the server 350 may identify a controlled device located in the at least one space on a map corresponding to the at least one space among the entire map, and restrictively provide control authority for the identified controlled device.

According to an embodiment, control authority for a controlled device desired by a user of the electronic device 310 among the controlled devices may be restrictively provided according to a specified condition.

As described above, the electronic device 310 may share at least part of the entire map data with the invited member device 305 by inviting to the IoT-based service.

In an embodiment, the member device 305 may perform control of at least some of the IoT devices 320a, 320b, 320c, 320d through the IoT-based application, similarly to the electronic device 310. Here, the member device 305 may perform control of at least some of the IoT devices 320a, 320b, 320c, 320d through the same application as the electronic device 310 or through an application for IoT control different from the electronic device 310.

In an embodiment, by receiving (or sharing) a partial map from among the entire map indicating locations of IoT devices in a plurality of spaces within a building, the member device 305 may intuitively identify a space where sharing is allowed among the plurality of spaces and controllable IoT devices within that space. Further, from the user's standpoint, by allowing the member device 305 to control an IoT device in a specific space or a specific IoT device, privacy protection and security may be strengthened from the user's standpoint since not all spaces are exposed.

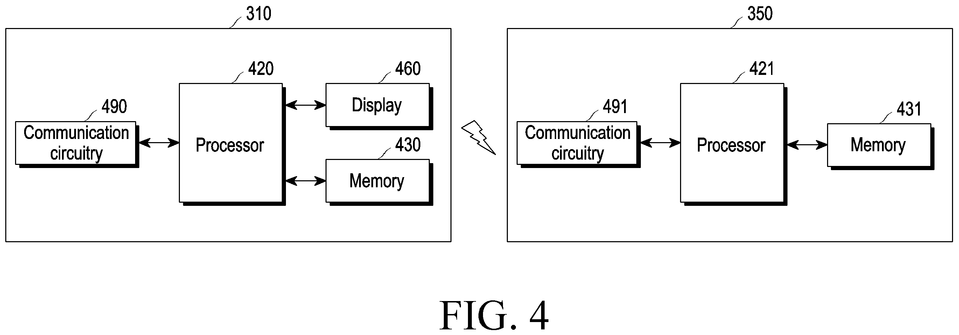

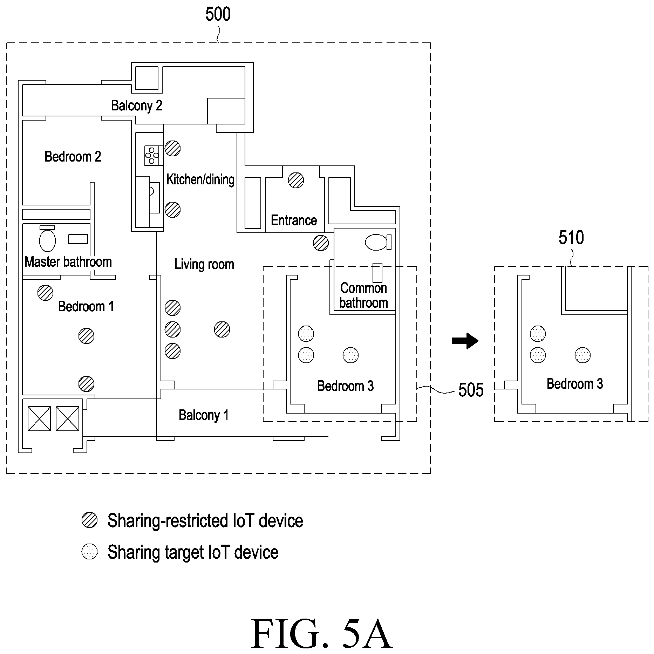

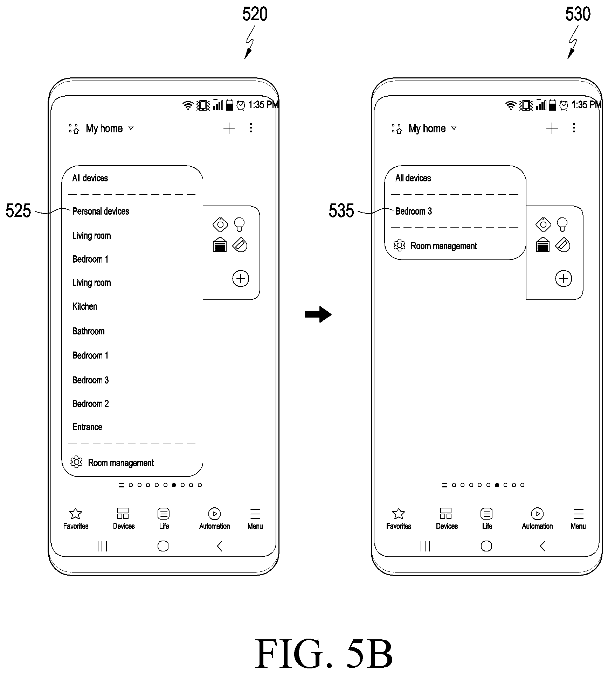

FIG. 4 is an internal block configuration diagram illustrating each of an electronic device and a server that perform IoT control according to an embodiment. To help understanding of the description of FIG. 4, it is described with reference to FIG. 5A and FIG. 5B. FIG. 5A is a view illustrating a method of displaying a partial map according to authority in a map indicating locations of IoT devices according to an embodiment, and FIG. 5B is an example view illustrating screens displayed on an owner-side electronic device and a member-side external electronic device according to an embodiment.

Referring to FIG. 4, the electronic device 310 may include at least one processor 420, memory 430, a display 360, and/or communication circuitry 490.

According to an embodiment, the memory 330 (e.g., the memory 230 of FIG. 2) may store information for communication with at least one controlled device among a plurality of controlled devices (e.g., the IoT devices 320a, 320b, 320c, 320d of FIG. 3) and transmitted and received data. According to an embodiment, the memory 430 may store a control program for control of the electronic device 310, a UI related to an application provided by a manufacturer or downloaded from the outside and images for providing the UI, user information, documents, databases, or related data. For example, the memory 430 may store an internet of things-based application for controlling operations of controlled devices related to each space in an indoor environment.

According to an embodiment, in case that the display 460 is implemented in the form of a touch screen, the display 460 may display various types of information generated according to a user's touch operation.

According to an embodiment, the communication circuitry 490 may communicate with controlled devices under the control of the processor 420. According to an embodiment, the communication circuitry 490 may perform communication using at least one communication scheme among communication schemes including Zigbee, Z-Wave, Wi-Fi, Bluetooth, ultra-wide band (UWB), Wireless USB, and near field communication (NFC). For example, the communication circuitry 490 may perform low-power wireless communication using Zigbee or Z-Wave communication for communication with controlled devices. According to an embodiment, the communication circuitry 490 may support short-range communication such as Bluetooth or near field communication (NFC) in addition to Zigbee or Z-Wave communication.

According to an embodiment, the processor 420 may perform an operation based on at least one communication scheme supported by the electronic device 310. According to an embodiment, the processor 420 may be connected to surrounding controlled devices through a designated communication scheme. For example, the processor 420 may communicate with at least some of the controlled devices using a first communication scheme, and may communicate with other at least some of the controlled devices using a second communication scheme. In this case, the processor 420 may indirectly communicate with the controlled devices through the hub device 330, and the controlled devices may communicate with each other or with the electronic device 310 through an adjacent external device or the hub device 330 corresponding to an intermediate medium.

According to an embodiment, if an internet of things-based application is executed, the display 460 (e.g., the display module 260 of FIG. 2) may display a user interface related to the executed application under the control of the processor 420. According to an embodiment, the display 460 may display a map 500 visually representing locations of controlled devices as illustrated in FIG. 5A. For example, the map may be a floor plan of a building, and locations of controlled devices may be displayed on the map corresponding to each space within the building using objects such as icons for each of the controlled devices. For example, the processor 420 may display a map screen 500 capable of controlling controlled devices by space by distinguishing spaces in the building where controlled devices are located.

According to an embodiment, a user of the electronic device 310 may desire to provide (or share) a part of the entire map (or map data) 500 to a desired counterpart. Here, sharing a part of the entire map 500 should be understood as not only illustrating a map image corresponding to a part of the floor plan to the counterpart, but also sharing control authority capable of controlling operation of a controlled device in at least one space among the plurality of spaces with the counterpart.

The electronic device 310 may invite a counterpart to participate in the internet of things-based service using a member invitation function provided by the application. Here, methods for member invitation may include a method of using a QR code when the counterpart to be invited is currently in the same space together, a method of sending an invitation when the counterpart's account or email address is known, or a method of sharing a link when the counterpart's account or email is not known.

According to an embodiment, a request for sharing a part of the entire map 500 from the electronic device 310 may include access information (e.g., link information) for participating in the internet of things-based service. By providing such access information to the member device 305 through the server 350, the member device 305 may be invited to the internet of things-based service. In response to receiving a response to the invitation from the member device 305, the processor 420 may transmit information of a controlled device to share with the invited member device 305 to the server 350. Here, the information of the controlled device to share may include information of at least one controlled device selected by a user among the plurality of controlled devices located in each of the plurality of spaces. As described above, the owner-side electronic device 310 may select a controlled device to share after inviting a member (e.g., the member device 305), but a member may be invited after first selecting a controlled device to share, and the order of operations is not limited thereto.

According to an embodiment, the server 350 may include at least one processor 421, memory 431, and/or communication circuitry 491.

The processor 421 may receive a request to provide (or share) at least part of first map data (or entire map) (e.g., 500 of FIG. 5A) to an external electronic device (e.g., the member device 305) from the electronic device 310 through the communication circuitry 491. Here, the first map data may indicate a plurality of spaces of a building and locations of a plurality of controlled devices within the plurality of spaces. Further, the request to provide at least part of the first map data may include at least one of identification information of the at least one controlled device or identification information of at least one space to which the at least one controlled device belongs. For example, in response to receiving selection information of a controlled device selected by a user from the electronic device 310, the processor 421 may invite an external electronic device (e.g., the member device 305) selected by a user in order to provide control authority for the controlled device. The processor 421 may transmit a message including access information to the external electronic device selected by the electronic device 310, and accordingly, at least part of the first map data may be provided to the external electronic device that accesses the server 350 using the access information.

The processor 421 may generate second map data corresponding to the at least part of the first map data to provide to the external electronic device (e.g., the member device 305) among the first map data. For example, the processor 421 may generate the second map data indicating the at least one space of the building and a location of the at least one controlled device, based on at least one controlled device being allowed to be controlled by the external electronic device or the at least one controlled device belonging to at least one space.

In an embodiment, the processor 421 may identify a map image related to the at least one space, based on identifying that the at least one controlled device belongs to the at least one space using the identification information of the at least one controlled device included in the request. Alternatively, the processor 421 may identify a map image related to the at least one space, based on identifying the at least one controlled device belonging to the at least one space using the identification information of the at least one space included in the request.

As described above, the processor 421 may identify a space to which the selected controlled device belongs or a controlled device belonging to the selected space, in response to a user selection of a controlled device to be shared or a space where the controlled device is located.

The processor 421 may generate the second map data by including an object indicating the at least one controlled device in the identified map image.

The object indicating the controlled device may be replaced with expressions such as, e.g., visual object, icon, indicator, content, image, widget, and affordance, and there is no limitation on the type thereof.

According to an embodiment, an operation of generating new map data for an invited member may be performed by a map generator included in the server 350, but the map generator may be implemented through an internet of things-based application, and since the map generator may be implemented as a separate module, the placement location thereof may vary.

FIG. 5A and FIG. 5B may be referred to for illustrating the first map data and partial map data of the first map data to be shared. Referring to FIG. 5A, first map data 500 for a plurality of spaces within a building may include map data (or a map image) of an indoor environment and/or indoor map information. For example, the first map data may represent a plurality of spaces within a building, and may represent a two-dimensional map and/or a three-dimensional map. The two-dimensional map may be a floor plan (or a layout plan), and the three-dimensional map may be a map for representing virtual reality (VR), augmented reality (AR), or mixed reality (MR). The indoor map information may include coordinates for each of the plurality of spaces within a building and partition information (e.g., partition information by walls) between the plurality of spaces within the building. Further, the indoor map information may include information (e.g., identification information, product information) of a controlled device located in each of the plurality of spaces within a building. Further, the indoor map information may include authority setting information of each of the plurality of spaces within a building and a controlled device located within the spaces.

As described above, the first map data 500 for a plurality of spaces within a building may include a map image representing a floor plan and information (e.g., partition information) for distinguishing each space (e.g., room). When the first map data 500 is represented as a coordinate system, a boundary of each space (e.g., room) may also be represented as a coordinate system.

As described above, the map data for a plurality of spaces within a building may be stored in the memory 431 in the server 350. For example, the memory 431 may include a user DB for managing user information, a controlled device DB for managing information of controlled devices, or a map DB for storing and managing map data for spaces within a building for each building. Therefore, even when either a controlled device or a space to be shared is selected, the processor 421 may identify a controlled device and a space to be shared based on pairing information (or association relationship information) between a controlled device and a space stored in the memory 341 (e.g., a controlled device DB for managing information of controlled devices or a map DB for storing and managing map data for spaces within a building for each building).

The processor 421 (or map generator) may generate (or obtain) second map data (or a new map) based on information of a controlled device to share and information of a space where the controlled device is located. For example, the processor 421 (or map generator) may identify a map image related to at least one space 505 selected by a user among the plurality of spaces on the map 500, and may generate new map data 510 by placing objects indicating at least one controlled device selected by a user on the map image. As illustrated in FIG. 5A, the new map data 510 may be one in which at least one of a map image for remaining spaces excluding a map image related to the at least one space (e.g., bedroom 3) or an object indicating remaining controlled devices excluding the at least one controlled device (e.g., a sharing target IoT device located in bedroom 3) is not displayed. The indoor map information includes partition information (e.g., partition information by walls) between the plurality of spaces within a building, and the processor 421 (or map generator) may identify coordinate information of each space by representing each space as a coordinate system. Therefore, the processor 421 (or map generator) may also identify coordinate information of the selected space, thereby identifying a map image related to the corresponding space based thereon and providing a new map in which a controlled device is placed based on the identified map image to the member. For example, the processor 421 (or map generator) may extract a map image related to the at least one space from the first map data based on coordinate information of the selected space, and may generate the second map data 510 by including an object indicating the at least one controlled device in the extracted map image.

Further, controlled devices located in a space 510 where sharing is allowed among the spaces divided on the map in the form of a floor plan may be displayed as illustrated in FIG. 5A, but may also be displayed in a list form as illustrated in FIG. 5B. For example, as illustrated at 520 of FIG. 5B, a list 525 of all controllable controlled devices is displayed on the owner-side electronic device 310, whereas as illustrated at 530 of FIG. 5B, a list 535 of spaces and/or some controlled devices where sharing is allowed may be displayed on the member-side external electronic device.

According to an embodiment, the server 208, 350 may include communication circuitry 491, at least one processor 421, and memory 431 storing instructions. According to an embodiment, the instructions, when executed by the at least one processor, are configured to cause the server to receive a request to provide at least part of first map data from an electronic device, wherein the first map data may indicate a plurality of spaces of a building and locations of a plurality of controlled devices within the plurality of spaces.

According to an embodiment, the instructions, when executed by the at least one processor, are configured to cause the server to transmit a message including access information to an external electronic device selected by the electronic device, wherein the at least part of the first map data may be provided to the external electronic device that accesses the server using the access information.

According to an embodiment, the instructions, when executed by the at least one processor, may be configured to cause the server to, based on at least one controlled device being allowed to be controlled by the external electronic device or the at least one controlled device belonging to at least one space, generate second map data that correspond to the at least part of the first map data and indicate the at least one space of the building and a location of the at least one controlled device.

According to an embodiment, the instructions, when executed by the at least one processor, may be configured to cause the server to transmit the second map data to the external electronic device through the communication circuitry.

According to an embodiment, the instructions may be configured to cause the server to identify identification information of the at least one controlled device included in the request to provide at least part of the first map data, based on identifying that the at least one controlled device belongs to the at least one space using the identification information of the at least one controlled device, identify a map image related to the at least one space, and generate the second map data by including an object indicating the at least one controlled device in the identified map image.

According to an embodiment, the instructions may be configured to cause the server to generate the second map data, in which at least one of a map image for remaining spaces excluding a map image related to the at least one space or an object indicating remaining controlled devices excluding the at least one controlled device is not displayed.

According to an embodiment, the instructions may be configured to cause the server to extract a map image related to the at least one space from the first map data, and generate the second map data by including an object indicating the at least one controlled device in the extracted map image.

According to an embodiment, the instructions may be configured to cause the server to identify coordinates for each of the plurality of spaces of the building, and extract a map image related to the at least one space from the first map data based on the coordinates for the at least one space.

According to an embodiment, the instructions may be configured to cause the server to, in case that there are a plurality of map images related to the at least one space, generate the second map data by placing a map image corresponding to each of the at least one space at a position corresponding to the respective space among the plurality of spaces, based on the coordinates for the at least one space.

According to an embodiment, the request to provide at least part of the first map data may include at least one of identification information of the at least one controlled device or identification information of the at least one space to which the at least one controlled device belongs.

According to an embodiment, the instructions may be configured to cause the server to identify the at least one controlled device belonging to the at least one space using the identification information of the at least one space, based on identifying that the at least one controlled device belongs to the at least one space, identify a map image related to the at least one space, and generate the second map data by including an object indicating the at least one controlled device in the identified map image.

According to an embodiment, the instructions may be configured to cause the server to generate the second map data indicating control authority for the at least one controlled device by changing at least one of a color effect, a color, or saturation of an object indicating the at least one controlled device.

According to an embodiment, the instructions may be configured to cause the server to transmit information of control authority for the at least one controlled device with the second map data to the external electronic device.

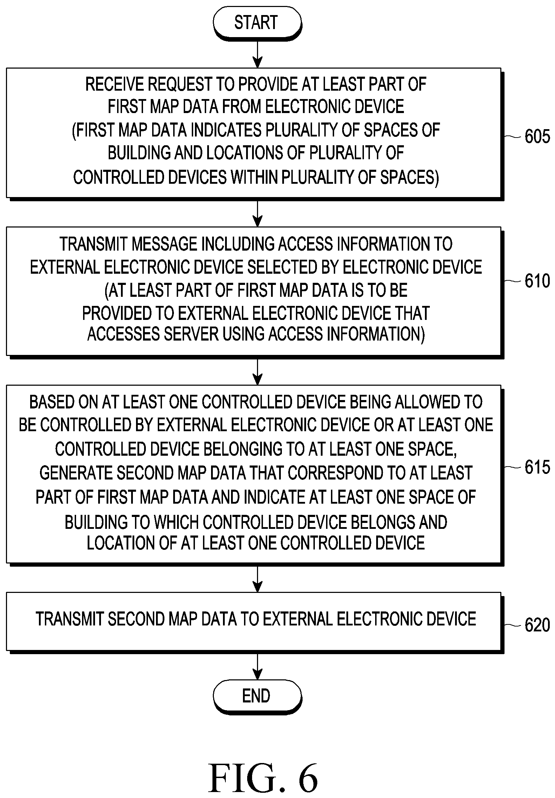

FIG. 6 is an operation flowchart for providing an internet of things-based service according to an embodiment.

Referring to FIG. 6, the method of operation may include operations 605 to 620. Each operation of the method of operation of FIG. 6 may be performed by a server (e.g., the server 208 of FIG. 2, the server 350 of FIG. 3 and FIG. 4), or at least one processor (e.g., the processor 421 of FIG. 4) of the server. In an embodiment, at least one of operations 605 to 620 may be omitted, an order of some operations may be changed, or another operation may be added.

Referring to FIG. 6, in operation 605, the server 350 may receive a request to provide (or share) at least part of first map data from the electronic device 310. The first map data may indicate a plurality of spaces of a building and locations of a plurality of controlled devices within the plurality of spaces. Here, the electronic device 310 may be in a state of being subscribed to a service that provides first map data indicating the plurality of spaces of the building and locations of a plurality of controlled devices (e.g., the IoT devices 320a, 320b, 320c, 320d of FIG. 3) within the plurality of spaces. The service may include an internet of things-based service.

According to an embodiment, the request to provide at least part of the first map data may include at least one of identification information of the at least one controlled device or identification information of at least one space to which the at least one controlled device belongs.

In operation 610, the server 350 may transmit a message including access information to the external electronic device 305 selected by the electronic device 310. For example, the server 350 may invite the external electronic device 305 to the internet of things-based service in response to the request from the electronic device 310. The at least part of the first map data may be provided to the external electronic device 305 that accesses the server 350 using the access information.

According to an embodiment, the message transmitted to the external electronic device 305 in response to the request to provide at least part of the first map data may include access information (or link information) for participating in the internet of things-based service. According to an embodiment, the server 350 may invite the external electronic device to the internet of things-based service by transmitting the link information to the external electronic device.

In operation 615, the server 350 may generate (or obtain) second map data indicating the at least one space of the building and a location of the at least one controlled device, based on at least one controlled device being allowed to be controlled by the external electronic device or the at least one controlled device belonging to at least one space. Here, the generated second map data may correspond to the at least part of the first map data.

According to an embodiment, the server 350 may identify identification information of the at least one controlled device included in the request to provide at least part of the first map data. The server 350 may identify a map image related to the at least one space, based on identifying that the at least one controlled device belongs to the at least one space using the identification information of the at least one controlled device. The server 350 may generate the second map data by including an object indicating the at least one controlled device on the identified map image.

According to an embodiment, the server 350 may generate the second map data, in which at least one of a map image for remaining spaces excluding a map image related to the at least one space or an object indicating remaining controlled devices excluding the at least one controlled device is not displayed.

According to an embodiment, the server 350 may extract a map image related to the at least one space from the first map data, and generate the second map data by including an object indicating the at least one controlled device on the extracted map image.

According to an embodiment, the server 350 may identify coordinates for each of the plurality of spaces of the building, and extract a map image related to the at least one space from the first map data based on the coordinates for the at least one space.

According to an embodiment, in case that there are a plurality of map images related to the at least one space, the server 350 may generate the second map data by placing a map image corresponding to each of the at least one space at a position corresponding to the respective space among the plurality of spaces, based on the coordinates for the at least one space.

According to an embodiment, the server 350 may generate the second map data indicating control authority for the at least one controlled device by changing at least one of a color effect, a color, or saturation of an object indicating the at least one controlled device.

According to an embodiment, the server 350 may identify identification information of at least one space to which the at least one controlled device included in the request to provide (or share) at least part of the first map data belongs, identify a map image related to the at least one space based on identifying the identification information of the at least one space, and generate the second map data by including an object indicating the at least one controlled device on the identified map image.

In operation 620, the server 350 may transmit the generated second map data to the external electronic device 305.

According to an embodiment, the server 350 may transmit information of control authority for the at least one controlled device with the second map data to the external electronic device. According to an embodiment, the server 350 may transmit the generated second map data with the information of control authority to the external electronic device, but may also generate the second map data to include the information of control authority, and transmit the second map data including the information of control authority to the external electronic device.

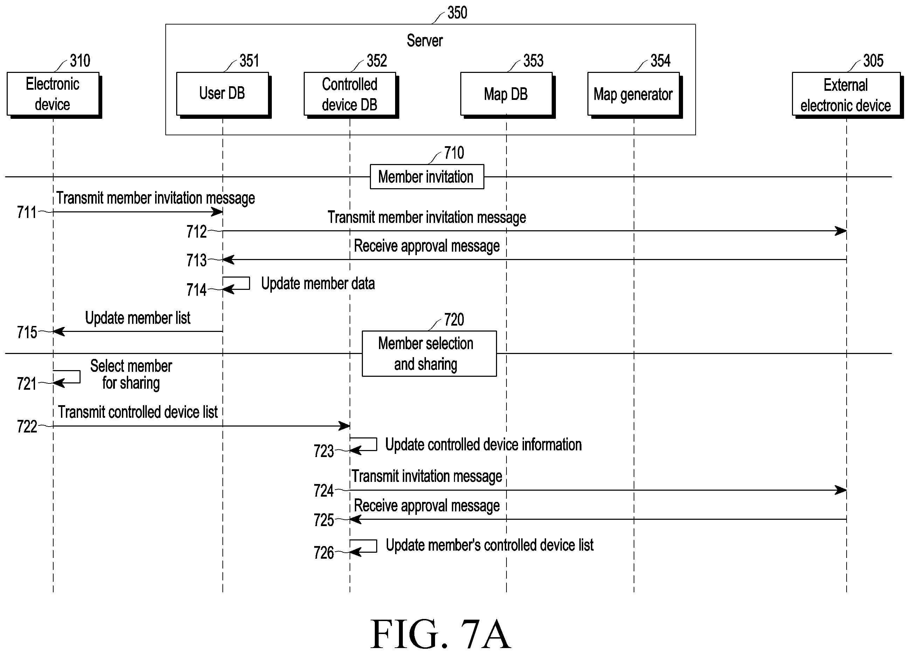

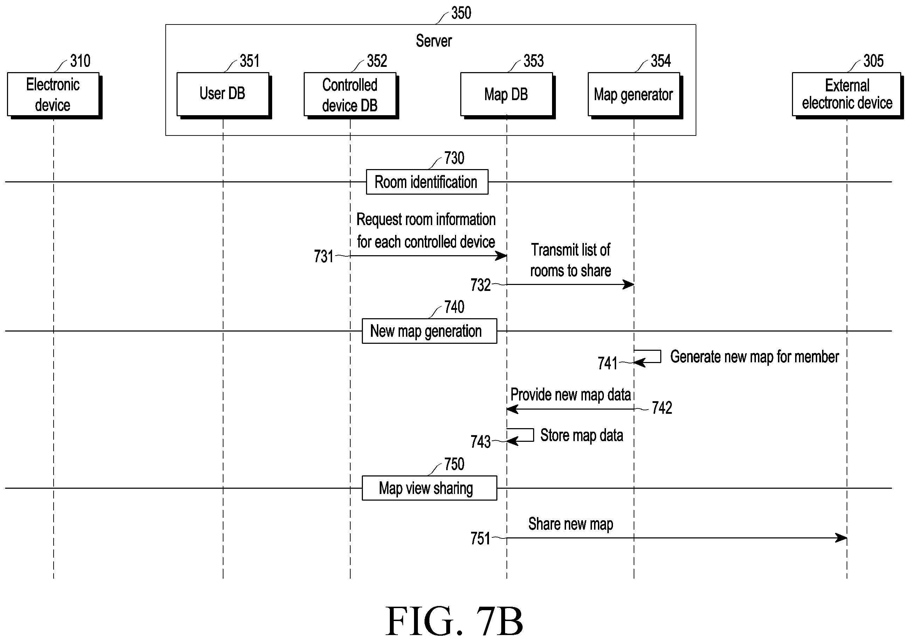

FIG. 7A and FIG. 7B are signal flow diagrams among an electronic device, a server, and an external electronic device for providing an IoT service according to member invitation according to an embodiment. FIG. 7B is a diagram continuing from FIG. 7A.

Referring to FIG. 7A and FIG. 7B, the server 350 may include a user DB 351 for managing user information, a controlled device DB 352 for managing information of controlled devices, or a map DB 353 for storing and managing map data for spaces within a building. In FIG. 7A and FIG. 7B, a case where a map generator 354 is included in the server 350 is illustrated, but this is merely an example, and since the map generator may be implemented as a separate module, the map generator may be disposed in a server different from the server 350 providing the IoT-based service, and the placement location thereof is not limited thereto.

Referring to FIG. 7A and FIG. 7B, an operation for providing control authority for a sharing target IoT device to a counterpart may largely include a member invitation operation 710, a member selection and sharing operation 720, a room identification operation 730, a new map generation operation 740, and a map view sharing operation 750.

First, the member invitation operation 710 may include an operation 711 in which the electronic device 310 transmits a member invitation message to the server 350, an operation 712 of transmitting a member invitation message to an external electronic device (e.g., the member device 305 of FIG. 3) 305 corresponding to a member to be invited based on counterpart information stored in the user DB 351 in the server 350, an operation 713 of receiving an approval message responding to the invitation from the external electronic device 305, an operation 714 of updating member data in response to receiving the approval message, and an operation 715 of updating a member list in the electronic device 310. As described above, the member invitation operation 710 may begin with the owner-side electronic device 310 inviting a member with whom to share control authority for an IoT device.

The member selection and sharing operation 720 may include an operation 721 of selecting a member for sharing from the updated member list in the electronic device 310, an operation 722 of transmitting a list of controlled devices to share with respect to the selected member, an operation 723 of updating controlled device information of the controlled device DB 352 in the server 350 based on the controlled device list, an operation 724 of transmitting an invitation message to allow the external electronic device 305 corresponding to the invited member to participate in control of the IoT device, an operation 725 of receiving an approval message in response to the invitation message, and an operation 726 of updating the member's controlled device list. Here, a case where operations 724 to 726 are performed for invitation authentication for the external electronic device 305 is illustrated, but the operations 724 to 726 may be omitted. For example, in case that the external electronic device 305 is already subscribed to the internet of things service and registered with the server 350 based on the user account of the electronic device 310, the operations 724 to 726 may be omitted.

The room identification operation 730 may include an operation 731 of requesting room information for each controlled device and an operation 732 of transmitting (or providing) a list of rooms to share to be used for generating a map. Here, the room information may include information of a space to which each of the controlled devices (e.g., IoT devices) belongs.

The new map generation operation 740 may include an operation 741 of generating (or obtaining) a new map for the member, an operation 742 of providing new map data, and an operation 743 of storing the map data in the map DB 353. As described above, when IoT devices to share are determined, information of the IoT devices may be delivered to the map generator 354. Accordingly, the map generator 354 may configure (or generate, obtain) a new map to provide to the external electronic device 305 based on the information of the IoT devices and the room information where the IoT devices are located.

The map view sharing operation 750 may include an operation 751 of sharing the new map with the external electronic device 305. The server 350 may provide control authority for the IoT devices together with the new map to the external electronic device 305, so that the external electronic device 305 may perform control of the shared IoT devices based on the provided new map.

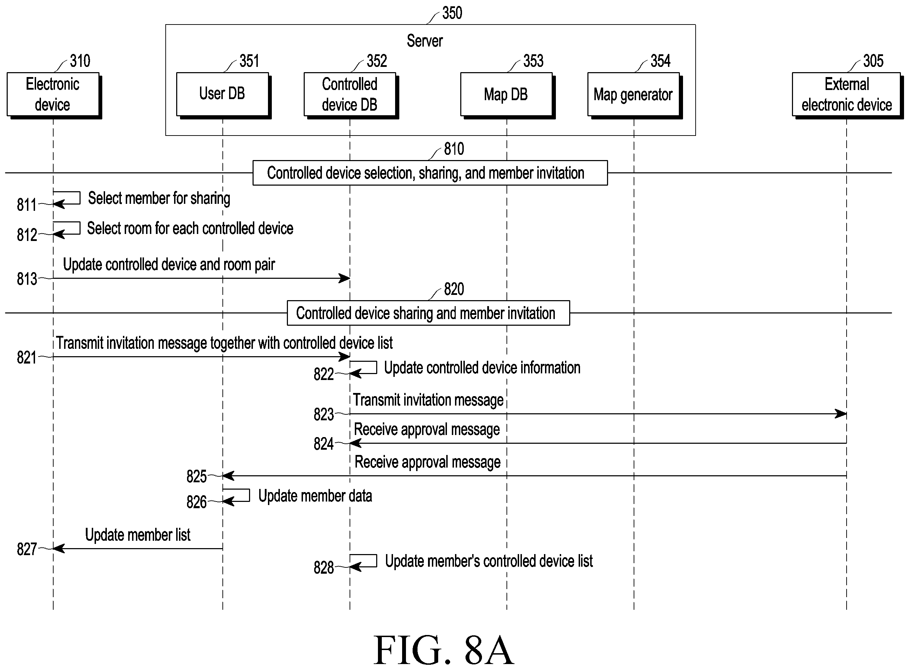

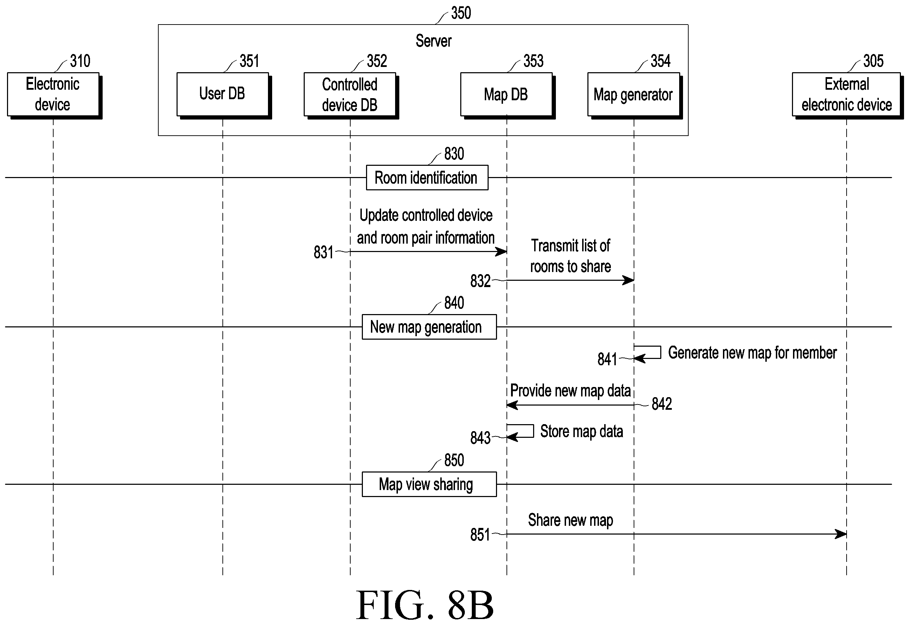

FIG. 8A and FIG. 8B are signal flow diagrams among an electronic device, a server, and an external electronic device for providing an IoT service according to selection of a sharing target IoT device according to an embodiment. Referring to FIG. 8A and FIG. 8B, an operation for providing control authority for a sharing target IoT device to a counterpart may largely include a controlled device selection, sharing, and member invitation operation 810, a controlled device sharing and member invitation operation 820, a room identification operation 830, a new map generation operation 840, and a map view sharing operation 850.

The controlled device selection, sharing, and member invitation operation 810 may include an operation 811 of selecting a member for sharing, an operation 812 of selecting a room for each controlled device, and an operation 813 of updating a controlled device and room pair.

The controlled device sharing and member invitation operation 820 may include an operation 821 of transmitting an invitation message together with a list of controlled devices selected by a user, an operation 822 of updating controlled device information, an operation 823 of transmitting an invitation message, operations 824, 825 of receiving an approval message, an operation 826 of updating member data, an operation 827 of updating a member list, and an operation 828 of updating the member's controlled device list.

The room identification operation 830, the new map generation operation 840, and the map view sharing operation 850 are the same as the room identification operation 730, the new map generation operation 740, and the map view sharing operation 750 of FIG. 7B, so detailed descriptions thereof will be omitted.

In FIG. 7A and FIG. 7B, a case of selecting an IoT device to share with an invited member after inviting the member and identifying room information for the selected IoT devices to obtain a new map has been described as an example, but as in FIG. 8A and FIG. 8B, an operation of inviting a member with whom to share may be performed after selecting an IoT device to share. According to an embodiment, an IoT device to share may be selected and, when sharing, an invitation may be requested to a member with whom to share, and the order of operations is not limited thereto.

In an embodiment, when room information with which IoT devices are disposed is not stored together in case that the owner-side electronic device 310 registers IoT devices, the external electronic device 350 may be guided to designate a room for IoT devices to share.

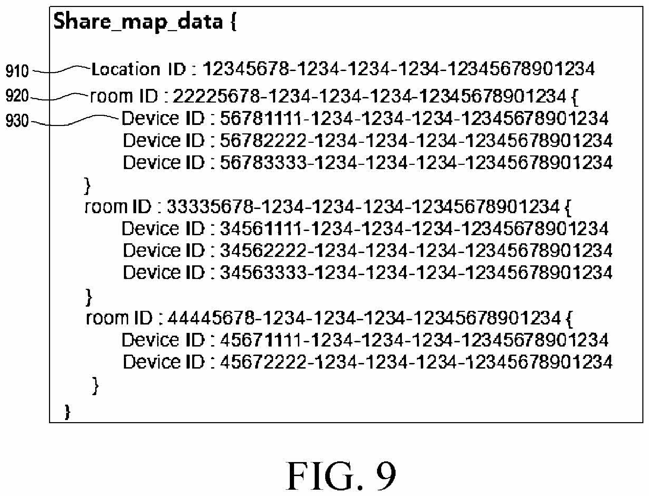

FIG. 9 is a view illustrating a configuration of shared map data according to an embodiment.

Referring to FIG. 9, shared map data may be used for generating (or obtaining) map data to share with an invited member. In the case of entire map data indicating a plurality of spaces of a building and locations of a plurality of controlled devices within the plurality of spaces, a building may be identified using identification information allocated to the building (e.g., location ID) 910, the plurality of spaces within the building may be identified using identification information for each space (e.g., room ID) 920, and controlled devices (e.g., IoT devices) placed in each space may be identified using identification information of the controlled devices (e.g., Device ID) 930. In order for only a part of the entire map data to be shared with an invited member, shared map data may include identification information allocated to a building (e.g., location ID), identification information of at least one space to share among the plurality of spaces (e.g., room ID), and identification information of at least one controlled device within the at least one space (e.g., Device ID). For example, since partial map data to share among the entire map data may differ according to the user's purpose, identification information may be allocated to each shared map data. For example, in order to distinguish entire map data serving as a reference used for generating shared map data, the entire map data may include identification information allocated to a building (e.g., location ID), and such identification information allocated to the building may be used for distinguishing shared map data, but may be designated in various ways. For example, a term named by a user such as 'my home' or 'office' may be utilized as an identifier of shared map data. In FIG. 9, there are three room IDs, and identification information of controlled devices (e.g., IoT devices) to share is included for each room ID. This represents a space to be shared and controlled devices to share among controlled devices placed in the corresponding space.

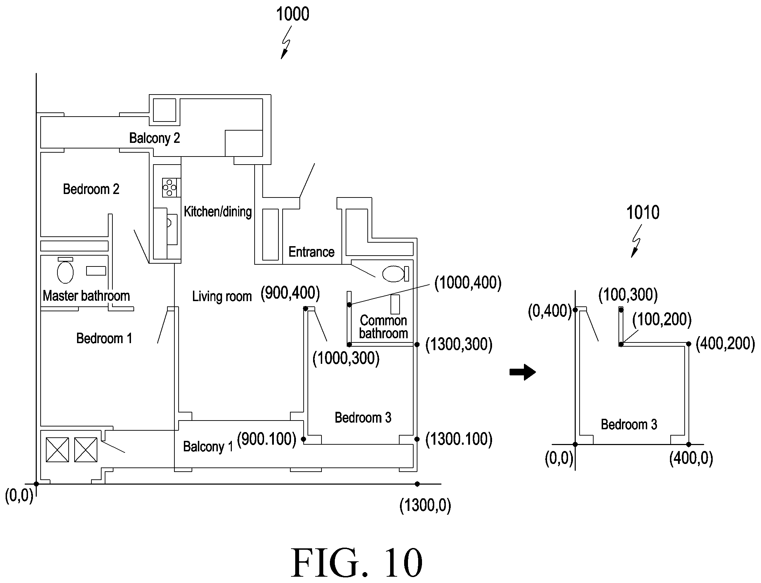

FIG. 10 is a view illustrating a method of separating spaces within a map according to an embodiment.

Referring to FIG. 10, first map data 1000 provided to the owner-side electronic device 310 may include a map image representing a floor plan and information (e.g., partition information) for distinguishing each space (e.g., room). When the entire map data is represented as a coordinate system, a boundary of each space (e.g., room) may also be represented as a coordinate system.

Second map data 1010 provided to the invited member-side external electronic device 305 may be one in which a map image related to a space selected by a user is extracted from the first map data 1000, and an object indicating at least one controlled device to share is included in the map image. The second map data 1010 may include a map image corresponding to a partial space based on partition information (e.g., partition information by walls) between the at least one space shared among the plurality of spaces within a building, along with authority setting information of a controlled device located in the space.

For example, FIG. 10 illustrates a case of creating a new map using coordinate information of bedroom 3. Coordinate information of a map view may vary according to a method of managing the map view, such as absolute coordinates or relative coordinates. Referring to FIG. 10, the server 350 (or map generator 354) may extract (or separate) a map image of bedroom 3 from the first map data 1000 with respect to coordinate information of bedroom 3, change and apply conventional coordinates with respect to the corresponding map, and provide it to the invited member.

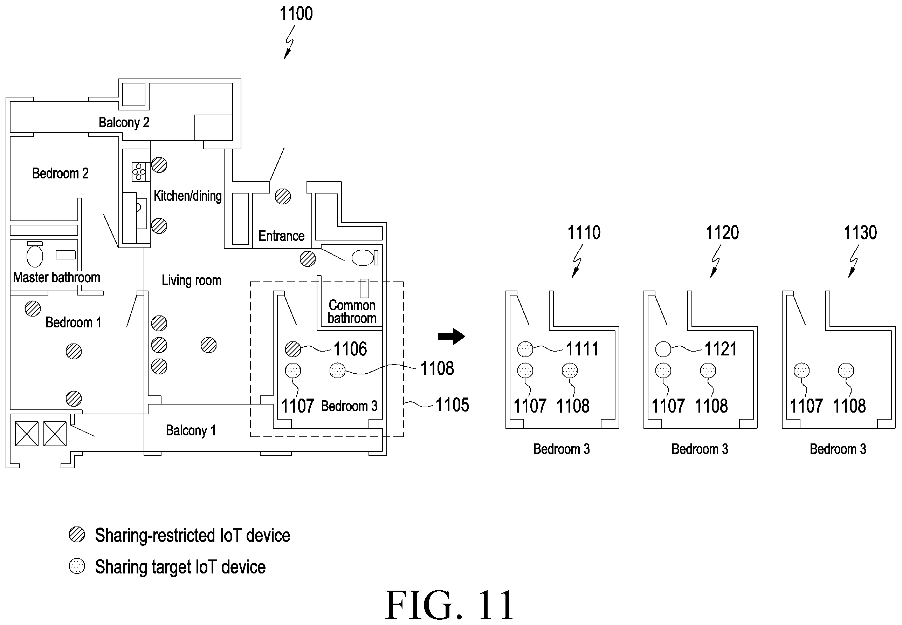

FIG. 11 is an example view illustrating a location of a sharing target IoT device in one space within a map according to an embodiment.

Referring to FIG. 11, first map data 1100 provided to the owner-side electronic device 310 may be illustrated to the invited member-side external electronic device 305 in the form of partial data 1110, 1120, 1130 of the first map. For example, when a space to which a controlled device 1107, 1108 selected by a user as a sharing target among a plurality of controlled devices 1106, 1107, 1107 belongs is bedroom 3, a space 1105 corresponding to bedroom 3 in the first map data 1100 and a controlled device (or IoT device) belonging to the space 1105 may be displayed as map data 1110, 1120, 1130 in various forms. Here, control authority for the at least one controlled device may be indicated by changing at least one of a color effect, a color, or saturation of an object indicating the at least one controlled device on the partial map data 1110, 1120, 1130. In the case of the first partial map data 1110, a controlled device 1111 that did not receive control authority is also displayed like controlled devices 1107, 1108 granted control authority, but information inquiry or control for the controlled device 1111 without control authority may be restricted. In the case of the second partial map data 1120, similar to the first partial map data 1110, objects indicating controlled devices 1107, 1108 with control authority and a controlled device 1121 without control authority are displayed in different colors, so that the invited member side may intuitively recognize the lack of authority. In an embodiment, according to an authority level (e.g., full inquiry possible, status inquiry possible, control possible, device removal possible) for a controlled device with control authority, objects may also be indicated using different colors or transparency, and various methods may be used to visually represent that the given authority is different, such as displaying numbers or letters according to the authority level on an object, or different shapes.

In the case of the third partial map data 1130, a controlled device that did not receive control authority may be restricted in display like other rooms that are not illustrated because sharing is not allowed, and accordingly, only objects indicating controlled devices 1107, 1108 with control authority may be displayed.

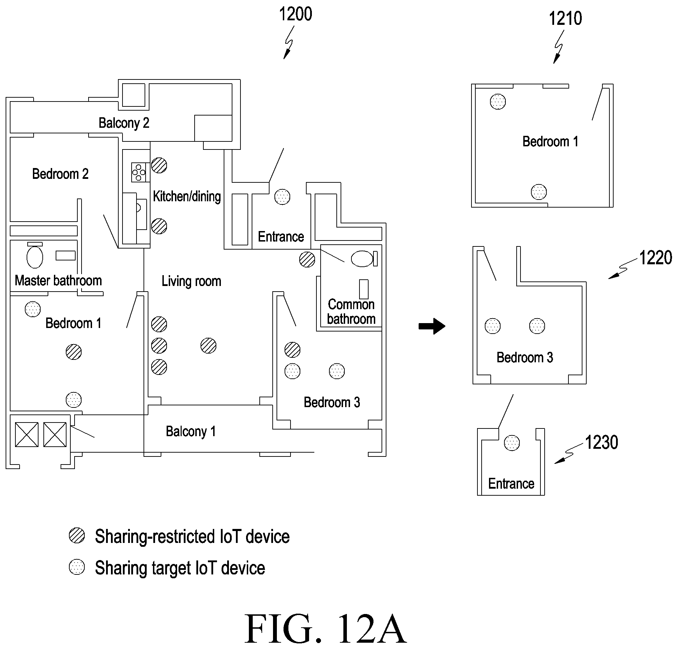

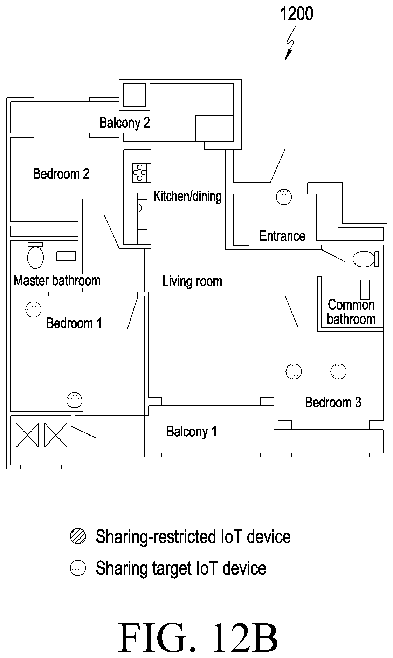

FIG. 12A is an example view illustrating locations of sharing target IoT devices in two or more spaces within a map in a first manner according to an embodiment, and FIG. 12B is an example view illustrating locations of sharing target IoT devices in two or more spaces within a map in a second manner according to an embodiment.

Referring to FIG. 12A and FIG. 12B, among map data 1200 provided to the owner-side electronic device 310, the respective partial map data 1210, 1220, 1230 indicating shared spaces (e.g., bedroom 1, bedroom 3, entrance) and IoT devices located in the shared spaces may be displayed separately by space. As described above, at least one of a map image for remaining spaces excluding the shared spaces or an object indicating remaining controlled devices excluding controlled devices to be shared may not be displayed. Here, so that a user may not identify spaces corresponding to the entire floor plan, only map images corresponding to partial spaces among the entire spaces may be separately displayed as in the respective partial map data 1210, 1220, 1230. On the other hand, as illustrated in FIG. 12B, only IoT devices located in the shared spaces may be displayed in the map data 1200 representing the entire floor plan.

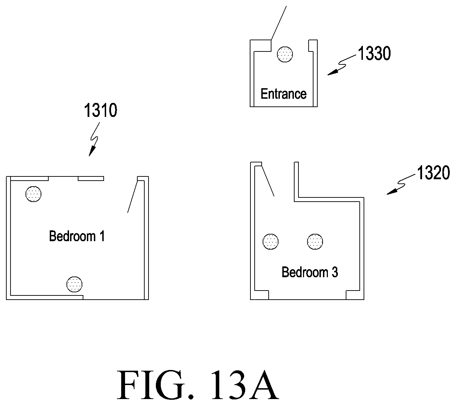

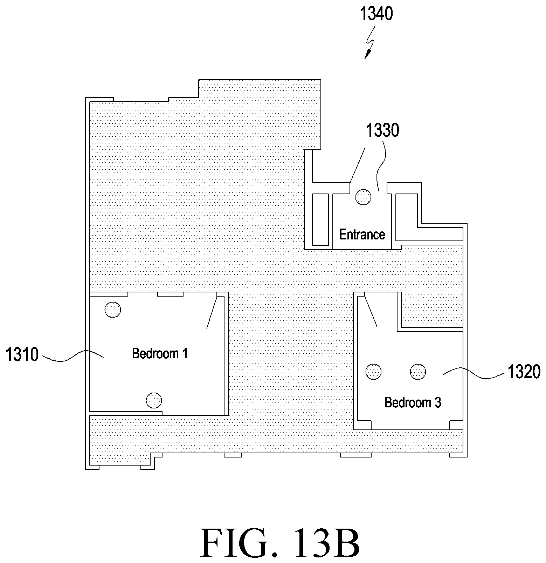

FIG. 13A is an example view illustrating locations of sharing target IoT devices in two or more spaces within a map in a third manner according to an embodiment, and FIG. 13B is an example view illustrating locations of sharing target IoT devices in two or more spaces within a map in a fourth manner according to an embodiment.

Referring to FIG. 13A, only approximate locations of spaces 1310, 1320, 1330 (e.g., bedroom 1, bedroom 3, entrance) where IoT devices located in the shared spaces in the entire map view are located may be displayed. Further, as illustrated in FIG. 13B, even when an outline of the entire map view 1340 is displayed, spaces 1310, 1320, 1330 (e.g., bedroom 1, bedroom 3, entrance) where sharing target IoT devices are located may be displayed while covering remaining spaces without authority excluding those spaces. As described above, the actual location or arrangement of each space uses the actual entire map data as is, but a map that restricts display for spaces without authority may be provided. In such a case, an outline for the entire map may be displayed for stable map display, and display may be restricted for rooms without granted authority.

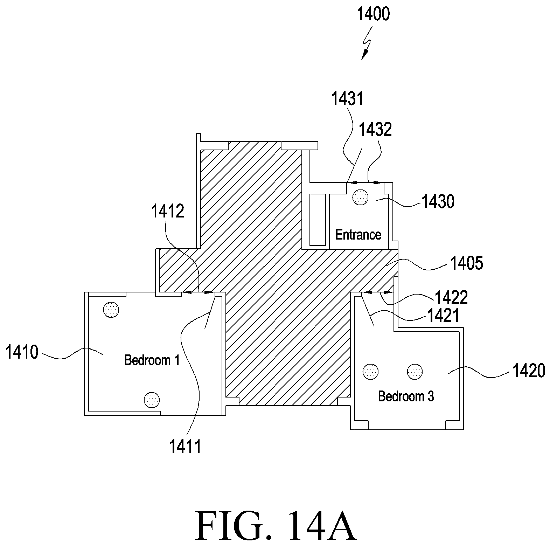

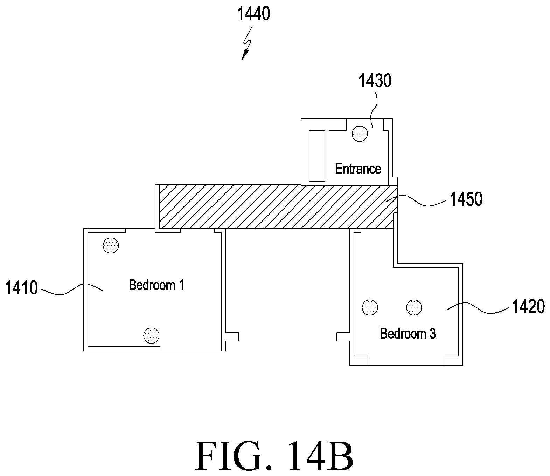

FIG. 14A is an example view illustrating locations of sharing target IoT devices in two or more spaces within a map in a fifth manner according to an embodiment, and FIG. 14B is an example view illustrating locations of sharing target IoT devices in two or more spaces within a map in a sixth manner according to an embodiment.

Referring to FIG. 14A, in case that there is a passage (or hallway) connecting each space (or room) (e.g., bedroom 1, bedroom 3, entrance) 1410, 1420, 1430 in the entire map 1400 (e.g., a living room passage between entrance-bedroom 3, a living room and kitchen/dining passage between entrance-bedroom 1), all connected spaces 1405 may be displayed.

Further, as illustrated at 1440 of FIG. 14B, only a portion 1450 corresponding to a passage among the entire space 1405 connecting each space (or room) (e.g., bedroom 1, bedroom 3, entrance) 1410, 1420, 1430 may be cut and displayed.

According to an embodiment, a method of generating a portion corresponding to a passage may vary. For example, a method of identifying an entrance of each shared room may be used to generate a portion corresponding to a passage. Here, those skilled in the art will understand that the expression "identification" by the server 350 (or map generator 354) may be replaced with expressions such as detect, recognize, determine, and sense. As a method of identifying an entrance of each shared room, referring to FIG. 14A, it may include a method of identifying a door 1411, 1421, 1431 on the floor plan, a method of detecting a position (or an open position without a wall) 1421, 1422, 1432 that is not partitioned by a wall from another room by referring to partition information by walls, or a method of receiving manual input from a user. Further, a method of designating each entrance as coordinates may include a method of designating a center point (e.g., the center of the door 1411, 1421, 1431) as coordinates (or a pointer), a method of designating two opposite sides of the entrance (e.g., an open position without a wall) 1421, 1422, 1432 as pointers, or a method of receiving manual input from a user. Further, a method of connecting a pointer of each entrance to a pointer of another entrance may include a method of connecting in a straight line when a straight line connection is possible, a method of bending using that wall as a pointer when a wall or another wall is encountered during straight line connection, or a method of receiving a path of a passage directly from a user. As described above, when a passage is designated, a passage may be created by increasing the width of the connected line. According to an embodiment, a method of generating a portion corresponding to a passage is not limited to the above, and various methods may be applicable.

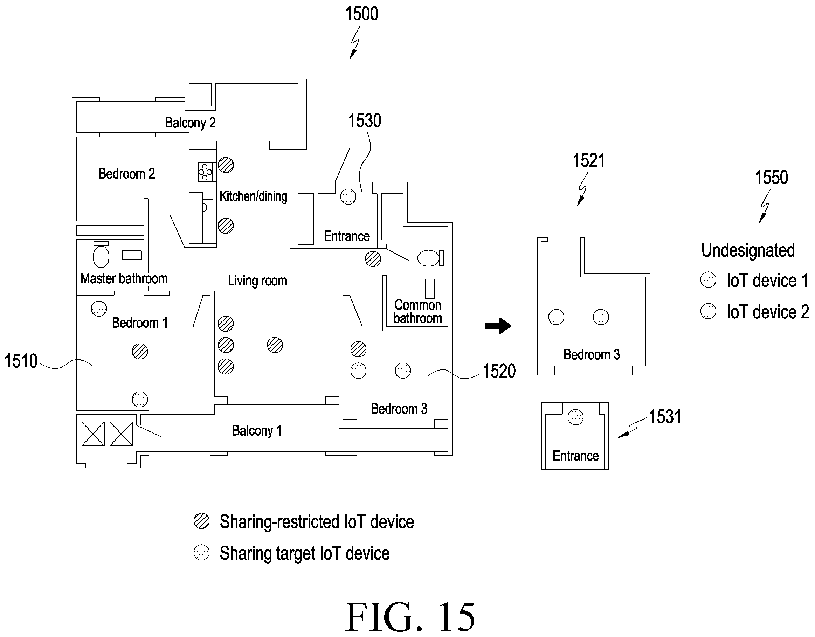

FIG. 15 is an example view illustrating locations of IoT devices in a space where sharing is allowed and a space where sharing is not allowed within a map according to an embodiment.

FIG. 15 illustrates a room-based map management method, and may be at least partially identical or similar to a controlled device-based map management method.

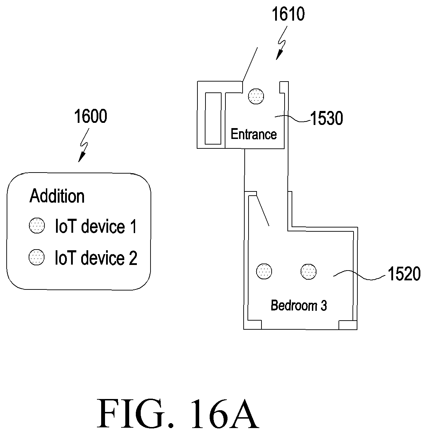

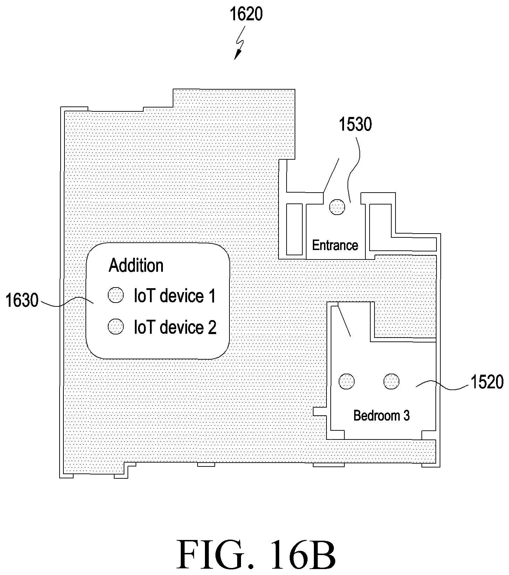

FIG. 15 illustrates a case where map data 1500 including a plurality of spaces of a building and objects indicating controlled devices to be shared and a controlled device with restricted sharing in the plurality of spaces is displayed. When at least one controlled device (e.g., an IoT device) to be shared is selected by the owner-side electronic device 310, controlled devices belonging to spaces (e.g., bedroom 3, entrance) 1520, 1530 to share among the spaces to which the selected controlled devices belong may be displayed using objects indicating the selected controlled devices on map images 1511, 1531 corresponding to the separated spaces. When some of the selected controlled devices belong to a specific space (e.g., bedroom 1) 1510, but the specific space (e.g., bedroom 1) 1510 is not selected (or allowed) as a space to be shared, a map image corresponding to the specific space may not be displayed, and only objects 1521 indicating controlled devices belonging to the specific space may be displayed. A method of displaying the objects 1521 indicating controlled devices belonging to the specific space is not limited thereto, and may be displayed in various ways as illustrated in FIG. 16A and FIG. 16B.

FIG. 16A is an example view illustrating an IoT device in a space where sharing is not allowed within a map in a first manner according to an embodiment, and FIG. 16B is an example view illustrating an IoT device in a space where sharing is not allowed within a map in a second manner according to an embodiment.

Referring to FIG. 16A and FIG. 16B, in case that the owner-side electronic device 310 selects at least one controlled device (e.g., an IoT device) as a device to share and selects spaces (or rooms) (e.g., bedroom 3, entrance) to share, the selected spaces 1520, 1530 may be displayed in various ways as illustrated at 1610. For example, the selected spaces 1520, 1530 may be displayed in the form including a passage (or hallway) connecting the selected spaces 1520, 1530 as illustrated at 1610, and an object indicating a controlled device controllable by the external electronic device may be placed in each space 1520, 1530. In this case, when a space to which remaining controlled devices belong after placing controlled devices selected as sharing targets is not selected (or allowed) as a space to be shared, the server 350 (or map generator 354) may generate map data in which a map image corresponding to the space to which the remaining controlled devices belong is not displayed and objects 1600 indicating the remaining controlled devices are placed at a position corresponding to the specific space (e.g., bedroom 1) 1510.

In an embodiment, in case that the owner-side electronic device 310 first selects a space (or room) to share, the server 350 may control all controlled devices (e.g., IoT devices) located in the corresponding room to be shared. Here, in case that there is a sharing request for IoT devices with no designated room, or in case that there is a sharing request for IoT devices that did not receive room sharing, the server 350 may generate map data in which the sharing-requested IoT devices are displayed separately and provide it to the external electronic device 305. For example, the server 350 may separately generate an undesignated room 1600 as illustrated in FIG. 16A, and generate map data in which the sharing-requested IoT devices are included in the undesignated room and provide it to the external electronic device 305. In an embodiment, the server 350 may generate map data in which objects indicating controlled devices (e.g., IoT devices) are placed in a space 1630 such as a popup in an empty space on a map 1620 including a passage or an overall outline connecting the selected spaces 1520, 1530 as illustrated in FIG. 16B, and provide it to the external electronic device 305.

As described above, according to an embodiment, by providing a partial map to an invited member from among the entire map indicating locations of IoT devices in a plurality of spaces within a building, the invited member may intuitively identify a space where sharing is allowed among the plurality of spaces and IoT devices within that space. Further, according to an embodiment, by granting different authorities to other users according to the user's purpose, so that other users granted the authority may control an IoT device in a specific space or a specific IoT device, security may be strengthened from the user's standpoint.

An electronic device according to various embodiments disclosed in the disclosure may be a device of various types. An electronic device may include, e.g., a portable communication device (e.g., a smartphone), a computer device, a portable multimedia device, a portable medical device, a camera, a wearable device, or a home appliance. An electronic device according to an embodiment of the disclosure is not limited to the above-described devices.

Various embodiments of the disclosure and terms used therein are not intended to limit the technical features described in the disclosure to specific embodiments, and should be understood to include various modifications, equivalents, or substitutes of the corresponding embodiment. In connection to the description of drawings, similar reference numerals may be used for similar or related components. A singular form of a noun corresponding to an item may include one or more the items unless the relevant context clearly indicates otherwise. In the disclosure, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof. Terms such as "first" or "second" may be used simply to distinguish the corresponding component from another corresponding component and do not limit the corresponding components in other aspects (e.g., importance or order). When a predetermined (e.g., first) component is referred to as "coupled" or "connected" to another (e.g., second) component, with or without a term "functionally" or "communicatively," it may mean that the predetermined component may be connected to the other component directly (e.g., wiredly), wirelessly, or through a third component.

A term "module" used in various embodiments of the disclosure may include a unit implemented as hardware, software, or firmware, and may be used interchangeably with terms such as, e.g., logic, a logic block, a component, or a circuit. A module may be an integrally configured component or a minimum unit of the component or a component thereof that performs one or more functions. For example, according to an embodiment, a module may be implemented in the form of an application-specific integrated circuit (ASIC).

Various embodiments of the disclosure may be implemented as software (e.g., a program 140) including one or more instructions stored in a storage medium (e.g., an internal memory 136 or an external memory 138) readable by a machine (e.g., an electronic device 101). For example, a processor (e.g., the processor 120) of the machine (e.g., the electronic device 101) may call at least one instruction among one or more instructions stored from the storage medium and execute the same. This enables the machine to be operated to perform at least one function according to the at least one instruction called. The one or more instructions may include code generated by a compiler or code executable by an interpreter. A machine-readable storage medium may be provided in the form of a non-transitory storage medium. Here, 'non-transitory' means only that the storage medium is a tangible device and does not include a signal (e.g., electromagnetic wave), and this term does not distinguish between a case in which data is semi-permanently stored in the storage medium and a case in which data is temporarily stored.

According to an embodiment, a method according to various embodiments disclosed in the disclosure may be included and provided in a computer program product. A computer program product may be traded between a seller and a buyer as a commodity. A computer program product may be distributed in the form of a machine-readable storage medium (e.g., compact disc read only memory (CD-ROM)), or may be distributed (e.g., downloaded or uploaded) online through an application store (e.g., Play Store^{TM}) or directly between two user devices (e.g., smartphones). In case of online distribution, at least part of a computer program product may be at least temporarily stored or temporarily generated in a machine-readable storage medium, such as memory of a server of a manufacturer, a server of an application store, or a relay server.

According to embodiments, each component (e.g., a module or a program) of the above-described components may include a singular entity or a plurality of entities, and some of the plurality of entities may be separately disposed in another component. According to various embodiments, one or more components or operations among the above-described corresponding components may be omitted, or one or more other components or operations may be added. Alternatively or additionally, a plurality of components (e.g., a module or a program) may be integrated into a single component. In this case, the integrated component may perform one or more functions of each component of the plurality of components in a same or similar manner as performed by a corresponding component among the plurality of components before the integration. According to various embodiments, operations performed by a module, a program, or another component may be executed sequentially, in parallel, repetitively, or heuristically, or one or more of the operations may be executed in a different order, omitted, or one or more other operations may be added.

According to an embodiment, in a non-transitory storage medium storing computer-readable instructions, the instructions are configured to, when executed by at least one processor 421 of a server 208, 350, cause the server to perform at least one operation, wherein the at least one operation may include an operation of receiving a request to provide at least part of first map data from an electronic device, wherein the first map data may indicate a plurality of spaces of a building and locations of a plurality of controlled devices within the plurality of spaces.

According to an embodiment, the at least one operation may include an operation of transmitting a message including access information to an external electronic device selected by the electronic device, wherein the at least part of the first map data may be provided to the external electronic device that accesses the server using the access information.

According to an embodiment, the at least one operation may include an operation of, based on at least one controlled device being allowed to be controlled by the external electronic device or the at least one controlled device belonging to at least one space, generating second map data that correspond to the at least part of the first map data and indicate the at least one space of the building and a location of the at least one controlled device.

According to an embodiment, the at least one operation may include an operation of transmitting the second map data to the external electronic device.

## Claims

1. A server (208, 350) comprising:
communication circuitry (491);
at least one processor (421); and
memory (431) storing instructions that, when executed by the at least one processor, cause the server to:
receive a request to provide at least part of first map data from an electronic device through the communication circuitry, wherein the first map data indicates a plurality of spaces of a building and locations of a plurality of controlled devices within the plurality of spaces,
transmit a message including access information to an external electronic device selected by the electronic device, wherein the at least part of the first map data is to be provided to the external electronic device that accesses the server using the access information,
based on at least one controlled device being allowed to be controlled by the external electronic device or the at least one controlled device belonging to at least one space, generate second map data that correspond to the at least part of the first map data and indicate the at least one space of the building and a location of the at least one controlled device, and
transmit the second map data to the external electronic device through the communication circuitry.

2. The server of claim 1, wherein the instructions cause the server to:
identify identification information of the at least one controlled device included in the request to provide the at least part of the first map data,
based on identifying that the at least one controlled device belongs to the at least one space using the identification information of the at least one controlled device, identify a map image related to the at least one space, and
generate the second map data by including an object indicating the at least one controlled device in the identified map image.

3. The server of claim 1 or 2, wherein the instructions cause the server to:
generate the second map data, in which at least one of a map image for remaining spaces excluding a map image related to the at least one space or an object indicating remaining controlled devices excluding the at least one controlled device is not displayed.

4. The server of any one of claims 1 to 3, wherein the instructions cause the server to:
extract a map image related to the at least one space from the first map data, and
generate the second map data by including an object indicating the at least one controlled device in the extracted map image.

5. The server of any one of claims 1 to 4, wherein the instructions cause the server to:
identify coordinates for each of the plurality of spaces of the building,
based on the coordinates for the at least one space, extract a map image related to the at least one space from the first map data, and
in case that there are a plurality of map images related to the at least one space, generate the second map data by placing a map image corresponding to each of the at least one space at a position corresponding to the respective space among the plurality of spaces, based on the coordinates for the at least one space.

6. The server of any one of claims 1 to 5, wherein the request to provide at least part of the first map data includes at least one of identification information of the at least one controlled device or identification information of the at least one space to which the at least one controlled device belongs.

7. The server of any one of claims 1 to 6, wherein the instructions cause the server to:
identify the at least one controlled device belonging to the at least one space using the identification information of the at least one space,
based on identifying that the at least one controlled device belongs to the at least one space, identify a map image related to the at least one space, and
generate the second map data by including an object indicating the at least one controlled device in the identified map image.

8. The electronic device of any one of claims 1 to 7, wherein the instructions cause the server to:
generate the second map data indicating control authority for the at least one controlled device by changing at least one of a color effect, a color, or saturation of an object indicating the at least one controlled device.

9. The server of any one of claims 1 to 8, wherein the instructions cause the server to:
transmit information of control authority for the at least one controlled device with the second map data to the external electronic device.

10. A method for providing an internet of things-based service in a server (208, 350), comprising:
receiving a request to provide at least part of first map data from an electronic device, wherein the first map data indicates a plurality of spaces of a building and locations of a plurality of controlled devices within the plurality of spaces;
transmitting a message including access information to an external electronic device selected by the electronic device, wherein the at least part of the first map data is to be provided to the external electronic device that accesses the server using the access information;
based on at least one controlled device being allowed to be controlled by the external electronic device or the at least one controlled device belonging to at least one space, generating second map data that correspond to the at least part of the first map data and indicate the at least one space of the building and a location of the at least one controlled device; and
transmitting the second map data to the external electronic device.

11. The method of claim 10, wherein generating the second map data includes:
identifying identification information of the at least one controlled device included in the request to provide at least part of the first map data;
based on identifying that the at least one controlled device belongs to the at least one space using the identification information of the at least one controlled device, identifying a map image related to the at least one space; and
generating the second map data by including an object indicating the at least one controlled device on the identified map image.

12. The method of claim 10 or 11, wherein generating the second map data includes:
generating the second map data, in which at least one of a map image for remaining spaces excluding a map image related to the at least one space or an object indicating remaining controlled devices excluding the at least one controlled device is not displayed.

13. The method of any one of claims 10 to 12, wherein generating the second map data includes:
extracting a map image related to the at least one space from the first map data; and
generating the second map data by including an object indicating the at least one controlled device on the extracted map image.

14. The method of any one of claims 10 to 13, wherein extracting the map image related to the at least one space includes:
identifying coordinates for each of the plurality of spaces of the building; and
extracting a map image related to the at least one space from the first map data based on the coordinates for the at least one space.

15. A non-transitory storage medium storing computer-readable instructions, wherein the instructions are configured to, when executed by at least one processor (421) of a server (208, 350), cause the server to perform at least one operation, wherein the at least one operation includes:
receiving a request to provide at least part of first map data from an electronic device, wherein the first map data indicates a plurality of spaces of a building and locations of a plurality of controlled devices within the plurality of spaces;
transmitting a message including access information to an external electronic device selected by the electronic device, wherein the at least part of the first map data is to be provided to the external electronic device that accesses the server using the access information;
based on at least one controlled device being allowed to be controlled by the external electronic device or the at least one controlled device belonging to at least one space, generating second map data that correspond to the at least part of the first map data and indicate the at least one space of the building and a location of the at least one controlled device; and
transmitting the second map data to the external electronic device.
